(19) Europäisches Patentamt
European Patent Office
Office européen des brevets

(11) **EP 4 722 280 A1**

(12) # EUROPEAN PATENT APPLICATION

(43) Date of publication:
**08.04.2026  Bulletin 2026/15**

(21) Application number: **25204561.2**

(22) Date of filing: **25.09.2025**

(51) International Patent Classification (IPC):
**C08J 9/00** (2006.01)        **C08J 9/18** (2006.01)
**C08J 9/232** (2006.01)

(52) Cooperative Patent Classification (CPC):
**C08J 9/18; C08J 9/0061; C08J 9/232;**
C08J 2201/034; C08J 2323/14; C08J 2323/16;
C08J 2423/14; C08J 2423/16

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority:  **07.10.2024  JP 2024176076**

(71) Applicant: **JSP Corporation**
**Tokyo 100-0005 (JP)**

(72) Inventor: **SAKAMURA, Takumi**
**Kanuma-shi, Tochigi, 322-0014 (JP)**

(74) Representative: **Kramer Barske Schmidtchen**
**Patentanwälte PartG mbB**
**European Patent Attorneys**
**Landsberger Strasse 300**
**80687 München (DE)**

(54) **POLYPROPYLENE-BASED RESIN EXPANDED BEAD, MOLDED ARTICLE OF POLYPROPYLENE-BASED RESIN EXPANDED BEADS, AUTOMOTIVE BUMPER CORE, AND AUTOMOTIVE TOOL BOX**

(57)    An expanded bead has a foamed layer made of a polypropylene-based resin and a specific shape including one or more defective portions. The polypropylene-based resin constituting the foamed layer contains a polypropylene-based resin (A) having a melting point of 135°C to 150°C and a flexural modulus of less than 1000 MPa, and a polypropylene-based resin (B) having a melting point of 145°C to 160°C and a flexural modulus of 1000 MPa or more. The mass ratio between the resin (A) and the resin (B) in the polypropylene-based resin is represented by resin (A):resin (B)= 65:35 to 35:65.

EP 4 722 280 A1

**Description**

BACKGROUND OF THE INVENTION

TECHNICAL FIELD

The present invention relates to a polypropylene-based resin expanded bead, a molded article of polypropylene-based resin expanded beads, an automotive bumper core, and an automotive tool box.

BACKGROUND ART

Molded articles of polypropylene-based resin expanded beads are lightweight and excellent in terms of cushioning properties, rigidity, and the like, and are therefore used for various applications. Molded articles of polypropylene-based resin expanded beads are produced by, for example, a method called an in-mold molding method in which polypropylene-based resin expanded beads are filled into a mold and then heated by supplying steam into the mold. In the in-mold molding method, when steam is supplied into the mold, the expanded beads are secondarily expanded, and their surfaces are melted. As a result, the expanded beads in the mold are mutually fusion-bonded, and a molded article having a shape corresponding to the shape of the cavity of the mold can be obtained. Since the molded article immediately after molding tends to swell due to secondary expansion, the molded article is cooled with water, air, or the like in the mold and then released from the mold.

In the above-described production process of the molded article, when the molded article released from the mold is stored at normal temperature, steam that has entered the cells in the molded article during in-mold molding is condensed in the cells, and a negative pressure is formed in the cells. As a result, volume shrinkage may occur in the molded article, and the molded article may be significantly deformed. Therefore, after the molded article is released from the mold, an aging step in which the molded article is allowed to stand for a predetermined time under a high-temperature atmosphere adjusted to, for example, about 60°C to 80°C to recover the shape of the molded article is performed. However, in the in-mold molding of the polypropylene-based resin expanded beads, since the aging step requires facility investment and requires time and effort, it has been desired to significantly improve the productivity of molded articles by omitting the aging step.

From such a viewpoint, for example, in Patent literature 1, a molded article made of cylindrical polypropylene-based resin expanded beads has been proposed.

PRIOR ART LITERATURE

[Patent Literature1] WO-A-2022-270425

SUMMARY

For the molded article described in Patent literature 1, depending on the shape and the like, there is room for further improvement in dimensional stability after in-mold molding, and it has been desired to reduce the amount of dimensional change of the molded article from the time point of release from the mold until the time point at which the shape is stabilized by the aging step or the like.

The present invention has been made in view of such a background and an object thereof is to provide a polypropylene-based resin expanded bead capable of improving the dimensional stability of a molded article, a molded article of polypropylene-based resin expanded beads, an automotive bumper core, and an automotive tool box.

One aspect of the present invention is directed to a polypropylene-based resin expanded bead according to the following [1] to [6].

[1] A polypropylene-based resin expanded bead having a foamed layer made of a polypropylene-based resin, wherein

the expanded bead has a columnar shape and has one or more defective portions of one or two kinds selected from the group consisting of a through-hole penetrating an inside of the expanded bead in an axial direction of the expanded bead and a groove extending along the axial direction on a side peripheral surface of the expanded bead,

a ratio Ca/A of an average cross-sectional area Ca per defective portion to an average cross-sectional area A of the expanded bead in a cut plane obtained by cutting the expanded bead in a plane perpendicular to the axial direction at a center of the expanded bead in the axial direction is 0.01 or more and 0.20 or less, a ratio Ct/A of a total cross-sectional area Ct of the defective portion(s) to the average cross-sectional area A of the expanded bead is 0.02 or more and 0.20 or less,

the polypropylene-based resin constituting the foamed layer contains a polypropylene-based resin (A) having a melting point of 135°C or higher and 150°C or lower and a flexural modulus of less than 1000 MPa and a polypropylene-based resin (B) having a melting point of 145°C or higher and 160°C or lower and a flexural modulus of 1000 MPa or more, and

a mass ratio between the polypropylene-based resin (A) and the polypropylene-based resin (B) in the polypropylene-based resin is represented by polypropylene-based resin (A) and polypropylene-based resin (B) in the polypropylene-based resin is 65:35 to 35:65.

[2] The polypropylene-based resin expanded bead according to [1], wherein an absolute value of a difference between a flexural modulus of the polypropylene-based resin (A) and a flexural modulus of the polypropylene-based resin (B) is 200 MPa or more and 500 MPa or less.

[3] The polypropylene-based resin expanded bead according to [1] or [2], wherein the polypropylene-based resin (B) is one or more propylene-based copolymers selected from the group consisting of an ethylene-propylene copolymer, a butene-propylene copolymer, and an ethylene-butene-propylene copolymer.

[4] The polypropylene-based resin expanded bead according to [3], wherein a total content of an ethylene component and a butene component in the polypropylene-based resin (B) is 0.5 mass% or more and 2.5 mass% or less.

[5] The polypropylene-based resin expanded bead according to any one of [1] to [4], wherein the polypropylene-based resin expanded bead has a crystal structure such that a resin intrinsic peak derived from melting of a crystal intrinsic to the polypropylene-based resin and a high-temperature peak having a vertex temperature higher than a vertex temperature of the resin intrinsic peak appear on a DSC curve obtained when the expanded bead is heated from 23°C to 200°C at a heating rate of 10°C/min, and

a heat of fusion of the high-temperature peak is 8 J/g or more and 25 J/g or less.

[6] The polypropylene-based resin expanded bead according to any one of [1] to [5], wherein the polypropylene-based resin expanded bead has an apparent density of 15 kg/m$^3$ or more and 200 kg/m$^3$ or less.

Another aspect of the present invention is directed to a molded article of polypropylene-based resin expanded beads according to the following [7] to [8].

[7] A molded article of polypropylene-based resin expanded beads, obtained by in-mold molding of the polypropylene-based resin expanded beads according to any one of [1] to [6].

[8] The molded article of polypropylene-based resin expanded beads according to [7], wherein the molded article has a maximum length of 600 mm or more.

Still another aspect of the present invention is directed to an automotive bumper core according to the following [9].

[9] An automotive bumper core, obtained by in-mold molding of the polypropylene-based resin expanded beads according to any one of [1] to [6].

Still another aspect of the present invention is directed to an automotive tool box according to the following [10].

[10] An automotive tool box, obtained by in-mold molding of the polypropylene-based resin expanded beads according to any one of [1] to [6].

According to these aspects, it is possible to provide a polypropylene-based resin expanded bead capable of improving the dimensional stability of a molded article, a molded article of polypropylene-based resin expanded beads, an automotive bumper core, and an automotive tool box.

BRIEF DESCRIPTION OF THE DRAWINGS

FIG. 1 is a schematic view of the appearance of an expanded bead having a through-hole as a defective portion;
FIG. 2 is a cross-sectional view taken along a line II-II in FIG. 1 (a plan view of a cut plane of the expanded bead);
FIG. 3 is a schematic view of the appearance of an expanded bead having grooves as defective portions;
FIG. 4 is a cross-sectional view taken along the line IV-IV in FIG. 3 (a plan view of a cut plane of the expanded bead);
FIG. 5 is a schematic view of the appearance of an expanded bead having a cover layer;
FIG. 6 is a cross-sectional view taken along the line VI-VI in FIG. 5 (a plan view of a cut plane of the expanded bead);
FIG. 7 is an explanatory diagram illustrating a method for calculating an area of a high-temperature peak;
FIG. 8 is a schematic view of the appearance of expanded bead D in Example;
FIG. 9 is a cross-sectional view taken along the line IX-IX in FIG. 8 (a plan view of a cut plane of the expanded bead);
FIG. 10 is a front view of a bumper core in Example 1-1;
FIG. 11 is a cross-sectional view taken along the line XI-XI in FIG. 10;

FIG. 12 is a perspective view of a tool box in Example 1-3; and
FIG. 13 is a top view of the tool box in Example 1-3.

DETAILED DESCRIPTION

(Polypropylene-based resin expanded bead)

A polypropylene-based resin expanded bead (hereinafter referred to as "expanded bead") has a columnar shape and has one or more defective portions of one or two kinds selected from the group consisting of a through-hole penetrating the inside of the expanded bead in an axial direction and a groove extending along the axial direction on the side peripheral surface of the expanded bead. In other words, the expanded bead has one or more of a defective portion composed of a through-hole penetrating the inside of the expanded bead in the axial direction and/or a defective portion composed of a groove extending along the axial direction on the side peripheral surface of the expanded bead. In addition, a ratio $Ca/A$ of an average cross-sectional area $Ca$ per defective portion to an average cross-sectional area $A$ of the expanded bead in a cut plane obtained by cutting the expanded bead in a plane perpendicular to the axial direction at the center of the expanded bead in the axial direction is 0.01 or more and 0.20 or less, and a ratio $Ct/A$ of a total cross-sectional area $Ct$ of the defective portion(s) to the average cross-sectional area $A$ of the expanded bead is 0.02 or more and 0.20 or less. In addition, the foamed layer of the expanded bead is composed of a polypropylene-based resin containing the polypropylene-based resin (A) and the polypropylene-based resin (B) in the specific mass ratio.

Conventionally, in the in-mold molding of a molded article of polypropylene-based resin expanded beads (hereinafter referred to as "molded article"), the molding conditions and the like are adjusted in consideration of a dimensional change of the molded article from the time of release from the mold to the time when the shape of the molded article is stabilized by an aging step or the like so that the molded article having a desired dimension is produced. However, in the case of producing a molded article by omitting the aging step or shortening the time of the aging step, the above-described dimensional change of the molded article was likely to become large. In addition, particularly in producing a molded article having a long maximum length, a molded article having a complicated shape such as a shape having a recessed portion, or a molded article requiring high dimensional accuracy, there is a concern that it may become difficult to adjust the dimension of the molded article to be within a desired range.

On the other hand, the expanded bead is capable of easily improving the dimensional stability of the molded article and reducing the dimensional change from the time of release from the mold to the time when the shape is stabilized. Therefore, even in the case of producing a molded article for which the degree of difficulty in in-mold molding is relatively high, such as a molded article having a relatively long maximum length, a molded article having a complicated shape, or a molded article requiring high dimensional accuracy, by omitting the aging step or shortening the time of the aging step, a molded article having a desired dimension can be easily obtained. In addition, even in the case of molding a molded article for which the degree of difficulty in in-mold molding is relatively high as described above, since it is possible to omit the aging step or shorten the time of the aging step, the productivity of the molded article can be significantly improved.

In addition, the expanded bead is capable of easily shortening the drying time of the molded article released from the mold and further improving the productivity of the molded article. Furthermore, the expanded bead is capable of shortening the cooling time of the molded article in the mold and improving the surface properties and fusion bondability of the molded article.

As the reasons for the expanded bead exhibiting such an effect, for example, the following reasons can be considered.

As described above, the expanded bead has at least one defective portion of one or more kinds selected from the group consisting of a groove and a through-hole. When such expanded beads are filled into the mold, it is considered that the defective portions of the expanded beads such as the through-holes or the grooves, voids between the expanded beads, and the like are complicatedly connected together in the molding cavity of the mold, whereby a fine passage through which steam can pass is formed in the molding cavities. Therefore, when steam is supplied into the mold, it is considered that the steam is likely to reach the inside of the mold via the fine passage, and all of the expanded beads in the mold can be easily heated. In addition, since the expanded beads including the defective portions have adequate secondary expandability, it is considered that the expanded beads appropriately expand when heated by steam. As a result of these, it is considered that the use of the expanded beads makes it possible to obtain a molded article having excellent fusion bondability and a good appearance even under conditions where the molding temperature during in-mold molding is low.

In addition, the expanded bead including the defective portion has adequate secondary expandability and can sufficiently undergo secondary expansion in the mold even in a case where no internal pressure is applied in advance or in a case where a relatively low internal pressure is applied. Furthermore, since the expanded bead has the above-described defective portion, it is considered that excessive expansion of the molded article can be avoided when heating with steam is completed. This makes it possible to shorten the time required from the completion of heating of the expanded beads to the stabilization of the shape of the molded article in the mold. As a result, it is considered that the time required for cooling the molded article in the mold can be shortened.

Furthermore, an appropriate open cell structure is formed in the molded article after the completion of the in-mold molding. The open cell structure is a minute space portion communicating with the outside of the molded article. The open cell structure is formed by complicated connection of voids between the expanded beads communicating with each other, open cell portions of the expanded beads constituting the molded article, the defective portions and the like. Since the expanded bead has the ratio Ca/A and the ratio Ct/A within the specific ranges and can inhibit the formation of a coarse open cell structure inside the molded article, it is considered that the time required for the drying of the molded article released from the mold can be shortened.

In addition, when the molded article having the open cell structure is taken out from the mold, air rapidly flows into the cells in the molded article via the open cell structure. As a result, the internal pressure of the molded article is considered to be stabilized early. Furthermore, since the foamed layer of the expanded bead is made of a polypropylene-based resin containing the polypropylene-based resin (A) and the polypropylene-based resin (B) in the specific mass ratio, it can improve the dimensional stability of the molded article and reduce the dimensional change of the molded article after release from the mold. In addition, since the dimensional change of the molded article released from the mold is small, it is considered that the expanded bead makes it possible to easily obtain a molded article having a desired dimension even in the case of producing a molded article for which the degree of difficulty in in-mold molding is relatively high without performing the aging step or by shortening the time of the aging step.

In the case of performing in-mold molding using expanded beads having no defective portions, the open cell structure is less likely to be formed in a molded article, the dimensional stability of the molded article is likely to deteriorate, and the dimensional change of the molded article from the time of release from the mold to the stabilization of the shape is likely to become large. Therefore, in this case, for example, when a molded article for which the degree of difficulty in in-mold molding is relatively high is produced without performing the aging step or by shortening the time of the aging step, there is a concern that it becomes difficult to adjust the dimension of the molded article to a desired dimension. In addition, in the case of performing in-mold molding using expanded beads having no defective portions, there is a concern that poor fusion between the expanded beads or an increase in the cooling time of a molded article in the mold may be caused, and the productivity of the molded article may significantly decrease.

Even when the expanded bead has the defective portions, in a case where the ratio Ca/A of the average cross-sectional area Ca per defective portion to the average cross-sectional area A of the expanded bead and/or the ratio Ct/A of the total cross-sectional area Ct of the defective portion(s) to the average cross-sectional area A of the expanded bead is excessively small, the effect of the defective portion is less likely to be obtained. Therefore, in this case, there is a concern that deterioration of the dimensional stability of the molded article or poor fusion between the expanded beads may be caused. In addition, in this case, the cooling time of the molded article in the mold becomes excessively long, and there is a concern that the productivity may decrease.

By using the expanded bead having the ratio Ca/A of 0.01 or more and the ratio Ct/A of 0.02 or more, the effect of the defective portion is exhibited, the moldability of the expanded bead can be improved, and the dimensional stability of the molded article can be improved. In addition, the cooling time of the molded article in the mold can be shortened. From the viewpoint of further enhancing such an effect, the ratio Ca/A is preferably 0.02 or more. From the same viewpoint, the ratio Ct/A is more preferably 0.03 or more.

On the other hand, in a case where the ratio Ca/A of the average cross-sectional area Ca per defective portion to the average cross-sectional area A of the expanded bead and/or the ratio Ct/A of the total cross-sectional area Ct of the defective portion(s) to the average cross-sectional area A of the expanded bead is excessively large, there is a concern that the secondary expandability of the expanded bead may decrease. As a result, relatively large voids are likely to be formed in the molded article, and there is a concern that the water content and the drying time are likely to increase. Meanwhile, when the amount of steam supplied into the mold during the in-mold molding is increased or the temperature of the steam is increased to reduce voids derived from the defective portions, there is a concern that the dimensional stability of the molded article may deteriorate.

By using the expanded bead having the ratio Ca/A of 0.20 or less and the ratio Ct/A of 0.20 or less, it is possible to easily avoid these problems and improve the dimensional stability of the molded article. In addition, such an expanded bead can shorten the drying time of the molded article after release from the mold, and can easily provide a molded article having excellent surface properties and rigidity. From the viewpoint of more reliably obtaining these effects, the ratio Ca/A is preferably 0.15 or less, more preferably 0.10 or less, still more preferably 0.08 or less, and particularly preferably 0.05 or less. From the same viewpoint, the ratio Ct/A is preferably 0.18 or less, more preferably 0.15 or less, still more preferably 0.10 or less, and particularly preferably 0.08 or less. A method for calculating the average cross-sectional area A of the expanded bead, the average cross-sectional area Ca per defective portion, and the total cross-sectional area Ct of the defective portion(s) will be described below.

In configuring a preferable range of the value of the ratio Ca/A, the upper limit value and the lower limit value of the above-described ratio Ca/A can be arbitrarily combined. For example, a preferable range of the value of the ratio Ca/A may be 0.01 or more and 0.15 or less, 0.01 or more and 0.10 or less, 0.02 or more and 0.08 or less, or 0.02 or more and 0.05 or less. Similarly, in configuring a preferable range of the value of the ratio Ct/A, the upper limit value and the lower limit value of the above-described ratio Ct/A can be arbitrarily combined. For example, a preferable range of the value of the ratio Ct/A may be 0.02 or more and 0.18 or less, 0.02 or more and 0.15 or less, 0.03 or more and 0.10 or less, or 0.03 or more and 0.08 or less.

As the shape of the expanded bead, more specifically, an aspect as described below can be adopted. In the following description, for convenience of explanation, an expanded bead having a through-hole and an expanded bead having a groove will be separately described, but the shape of the expanded bead according to the present invention also includes an aspect having both a through-hole and having a groove.

[Expanded bead having through-hole]

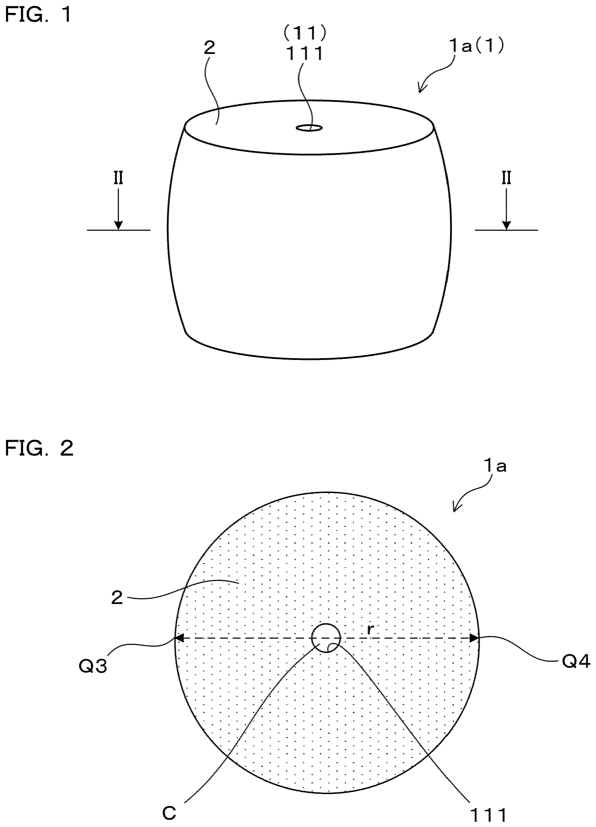

FIG. 1 and FIG. 2 show an example of an expanded bead 1 (1a) having a through-hole 111 as a defective portion 11. The expanded bead 1a shown in FIG. 1 is composed of a foamed layer 2 and has a tubular shape including the through-hole 111. The shape of the entire expanded bead may be, for example, a cylindrical shape as shown in FIG. 1 or a prismatic shape. The through-hole preferably penetrates the expanded bead in the axial direction. It is sufficient that the number of the through-holes is one or more.

In a case where the expanded bead has through-holes as defective portions, the through-holes preferably have an average hole diameter d of 0.1 mm or more and less than 1 mm. In this case, the Ca/A and/or Ct/A of the expanded bead can be easily adjusted to the above-described ranges. By setting the average hole diameter d of the through-holes to 0.1 mm or more, it is possible to inhibit the through-holes in the expanded beads from being crushed and closed during in-mold molding and to more reliably exhibit the effect of the through-holes as the defective portions. From the same viewpoint, the average hole diameter d of the through-holes is more preferably 0.2 mm or more, still more preferably 0.3 mm or more, particularly preferably 0.4 mm or more, and most preferably 0.5 mm or more.

On the other hand, in a case where the average hole diameter d of the through-holes is excessively large, there is a concern that the Ca/A and/or Ct/A of the expanded bead may become excessively large. Therefore, there is a concern that an excessively long time may be required for drying the molded article. In addition, there is a concern that unevenness or the like derived from gaps between the expanded beads or the through-holes is likely to be formed on the surface of the molded article, and that the rigidity of the molded article may decrease.

In addition, when the amount of steam supplied into the mold during in-mold molding is increased or the temperature of the steam is increased to avoid the formation of unevenness or the like derived from the gaps between the expanded beads or the through-holes, there is a concern that the dimensional stability of the molded article may deteriorate and the dimensional change of the molded article from the time of release from the mold until the time when the shape is stabilized may become large. By setting the average hole diameter d of the through-holes to 1 mm or less, these problems can be easily avoided, the dimensional stability of the molded article can be more easily improved even in a case of producing a molded article having a long maximum length or a molded article having a complicated shape. From the viewpoint of more reliably obtaining such an effect, the average hole diameter d of the through-holes is more preferably 0.95 mm or less, still more preferably 0.9 mm or less, and particularly preferably 0.85 mm or less.

In configuring a preferable range of the average hole diameter d of the through-holes, the upper limit value and the lower limit value of the above-described average hole diameters d can be arbitrarily combined. For example, a preferable range of the average hole diameter d may be 0.2 mm or more and less than 1 mm, 0.3 mm or more and 0.95 mm or less, 0.4 mm or more and 0.9 mm or less, or 0.5 mm or more and 0.85 mm or less.

The average hole diameter d of the through-holes 111 of the expanded bead 1a can be determined as follows. First, the expanded bead 1a is cut in a plane perpendicular to the axial direction at the center in the axial direction, and the cut plane is exposed as shown in FIG. 2. Next, a photograph of the cut plane is taken, and the cross-sectional area (specifically, the opening area) of the through-holes in the cut plane is calculated. In addition, the diameter of a virtual perfect circle having the same area as the cross-sectional area of the through-hole is calculated, and this value is defined as the hole diameter of the through-hole of each expanded bead. The above-described operation is performed on 50 or more expanded beads, and the arithmetic average value of the obtained hole diameters of the through-holes is defined as the average hole diameter d of the through-holes of the expanded beads. Even in a case where the hole diameter of the through-hole of each expanded bead is not uniform in the penetration direction, the hole diameter of the through-hole of each expanded bead is determined by the hole diameter of the through-hole in the cut plane as described above.

The average hole diameter d of the through-holes can be adjusted to be within the above-described specific range by adjusting the average hole diameter dr of through-holes in a resin particle to be described below, the apparent density of the expanded beads, and the like. In addition, by using a two-step expanded bead produced by two-step foaming as the expanded bead, the average hole diameter d can be more easily adjusted to a small value.

From the viewpoint of increasing the wall thickness of the expanded bead to improve the secondary expandability of the expanded bead and the rigidity of the molded article, and from the viewpoint of inhibiting the deformation or shrinkage of the molded article when the aging step is omitted, the average outer diameter D of the expanded beads is preferably 2 mm or more, more preferably 2.5 mm or more, and still more preferably 3 mm or more. On the other hand, from the viewpoint of improving the filling properties of the expanded bead into the mold, the average outer diameter D of the expanded beads is preferably 8 mm or less, more preferably 5 mm or less, and still more preferably 4.5 mm or less.

In configuring a preferable range of the average outer diameter D of the expanded beads, the upper limit value and the lower limit value of the above-described average outer diameter D can be arbitrarily combined. For example, a preferable range of the average outer diameter D may be 2 mm or more and 8 mm or less, 2.5 mm or more and 5 mm or less, or 3 mm or more and 4.5 mm or less. A method of calculating the average outer diameter D of the expanded beads will be described below.

The ratio d/D of the average hole diameter d of the through-holes to the average outer diameter D of the expanded beads is preferably 0.4 or less, more preferably 0.35 or less, still more preferably 0.3 or less, and particularly preferably 0.25 or less. When the ratio d/D is set to be 0.4 or less, it is possible to appropriately improve the secondary expandability of the expanded bead during in-mold molding and to more easily obtain a molded article having excellent surface properties and rigidity. On the other hand, the ratio d/D is preferably 0.05 or more and more preferably 0.1 or more from the viewpoint of further inhibiting the through-hole of the expanded bead being crushed and blocked during in-mold molding and more reliably exhibiting the effect of the through-hole.

In configuring a preferable range of the value of the ratio d/D, the upper limit value and the lower limit value of the above-described ratios d/D can be arbitrarily combined. For example, a preferable range of the value of the ratio d/D may be 0.05 or more and 0.4 or less, 0.05 or more and 0.35 or less, 0.1 or more and 0.3 or less, or 0.1 or more and 0.25 or less.

The average wall thickness t of the expanded beads having the through-holes is preferably 1.1 mm or more. When the average wall thickness t is within this range, since the wall thicknesses of the expanded beads are sufficiently thick, the secondary expandability during in-mold molding is further improved. In addition, the expanded beads are less likely to be crushed by an external force, and the rigidity of the molded article is further improved. From such a viewpoint, the average wall thickness t of the expanded beads is more preferably 1.2 mm or more. The average wall thickness t of the expanded beads having the through-holes may be 1.1 mm or more and 2.5 mm or less, or 1.2 mm or more and 2.0 mm or less.

The average wall thickness t of the expanded beads is the distance from the surface (that is, the outer surface) of the expanded bead to the outer edge (that is, the inner surface of the expanded bead) of the through-hole and is a value obtained by the following formula (1).

$$t = (D-d)/2 \qquad \dots (1)$$

    d: Average hole diameter of through-holes (unit: mm)
    D: Average outer diameter of expanded beads (unit: mm)

In addition, the ratio t/D of the average wall thickness t to the average outer diameter D of the expanded beads is preferably 0.30 or more and 0.50 or less. When t/D is within the above-described range, the filling properties of the expanded beads become more favorable in the in-mold molding of the expanded beads. In addition, it is possible to further improve the secondary expandability while maintaining the cooling time short. Therefore, a molded article having excellent appearance and rigidity can be produced with good productivity at a lower molding pressure (that is, the heating temperature). From such a viewpoint, the ratio t/D of the average wall thickness t to the average outer diameter D of the expanded beads is more preferably 0.32 or more and 0.50 or less and still more preferably 0.35 or more and 0.50 or less.

[Expanded bead having groove]

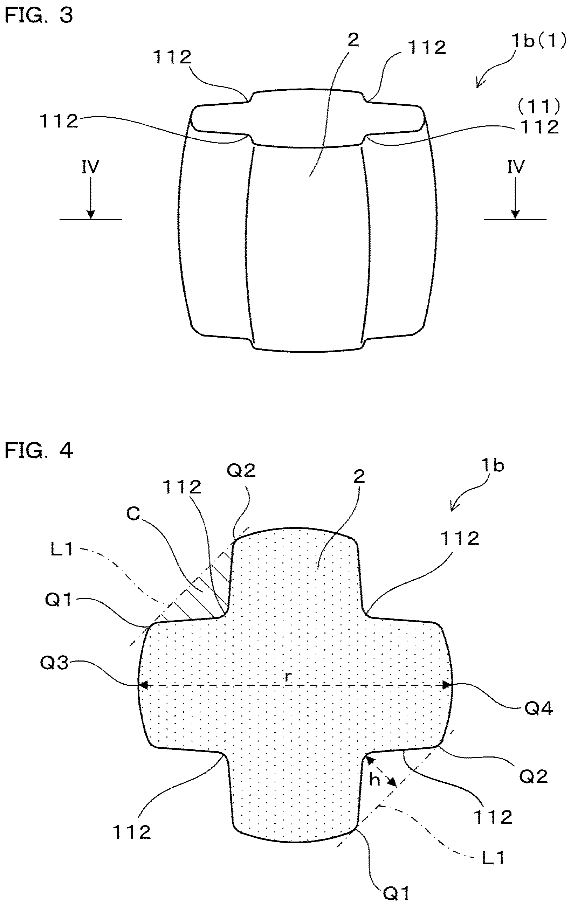

FIG. 3 and FIG. 4 show an example of an expanded bead 1 (1b) having grooves 112 as defective portions 11. The expanded bead 1b shown in FIG. 3 is composed of a foamed layer 2. In addition, the expanded bead 1b has a columnar shape and has at least one groove 112 on the side peripheral surface thereof.

The "groove" described above refers to a recessed portion provided on the side peripheral surface of the expanded bead 1b and extending along the axial direction of the expanded bead 1b. More specifically, as shown in FIG. 4, the groove 112 of the expanded bead 1b is observed as a portion where the outline of the expanded bead is recessed inward in a cross section appearing when the expanded bead 1b is cut in a plane perpendicular to the axial direction thereof.

The shape and the like of the expanded bead 1b can take various aspects. For example, as shown in FIG. 3 and FIG. 4, the expanded bead 1b may have a columnar shape whose cross section perpendicular to the axial direction is a cross shape. The expanded bead 1b having such a shape has four grooves 112 on its side peripheral surface. The cross-sectional shape of the expanded bead in a cross section perpendicular to the axial direction is not limited to the shape shown in FIG. 3 and FIG. 4 and can take various aspects, for example, a shape based on a circle, a shape based on a triangle, or a shape based on a quadrangle.

It is sufficient that the number of grooves 112 provided in the expanded bead is one or more. The cross-sectional shape of the groove 112 in the cross section perpendicular to the axial direction of the expanded bead is not limited to the V-shape as shown in FIG. 3 and FIG. 4, and may take various aspects such as a semicircular shape, a quadrangular shape, and a U-shape. In a case where the expanded bead has two or more grooves 112, all of the grooves 112 may have the same cross-sectional shape, or may have different cross-sectional shapes from each other.

The expanded bead preferably has two or more and six or less grooves. In this case, the open cell structure is more easily formed in the molded article. Therefore, the expanded bead can more easily improve the dimensional stability of the molded article.

In addition, in a case where the expanded bead has two or more grooves, it is preferable that the grooves are arranged at equal intervals on the side peripheral surface of the expanded bead. In other words, in a case where the expanded bead has a plurality of grooves, the grooves are preferably arranged at positions symmetrical with respect to the central axis of the expanded bead. When such an expanded bead is subjected to in-mold molding, the open cell structure is likely to be more uniformly formed in the molded article. Therefore, the expanded bead can more easily improve the dimensional stability of the molded article.

The average cross-sectional area per groove in the cut plane of the expanded bead is preferably 0.05 mm$^2$ or more and 1.2 mm$^2$ or less. By setting the above-described ratio Ca/A of the average cross-sectional area Ca per defective portion to the average cross-sectional area A of the expanded bead within the specific range, and further setting the average cross-sectional area per groove within the specific range, the above-described effect of the grooves can be more reliably obtained. From the same viewpoint, the average cross-sectional area per groove is more preferably 0.1 mm$^2$ or more and 1.0 mm$^2$ or less, and still more preferably 0.2 mm$^2$ or more and 0.8 mm$^2$ or less. It is noted that the method for calculating the average cross-sectional area per groove in the cut plane of the expanded bead is the same as the method for calculating the average cross-sectional area Ca per defective portion, except that the total of the cross-sectional areas C of the grooves 112 is used instead of the total cross-sectional areas of the defective portions 11 in each expanded bead 1 in the method for calculating the average cross-sectional area Ca per defective portion to be described below.

The ratio H/D of the average depth H per groove to the average outer diameter D of the expanded beads in the cut plane of the expanded beads is preferably 0.20 or less. In this case, the open cell structure is likely to be appropriately formed in the molded article, and the shrinkage or deformation of the molded article in the case of omitting the aging step can be more effectively inhibited. Furthermore, in this case, in addition to the above-described effect, the rigidity of the molded article can also be increased. From the viewpoint of further enhancing such an action and effect, the ratio H/D of the average depth H per groove to the average outer diameter D of the expanded beads is more preferably 0.18 or less and still more preferably 0.15 or less.

From the same viewpoint, the average depth H per groove in the cut plane of the expanded beads is preferably 1.0 mm or less, more preferably 0.8 mm or less, and still more preferably 0.5 mm or less.

In addition, from the viewpoint of inhibiting an excessive decrease in the open cell content of the molded article, the ratio H/D of the average depth H per groove to the average outer diameter D of the expanded beads in the cut plane of the expanded beads is preferably 0.02 or more and more preferably 0.05 or more. In addition, from the same viewpoint, the average depth H per groove in the cut plane of the expanded beads is preferably 0.1 mm or more and more preferably 0.2 mm or more. In configuring a preferable range of the value of the ratio H/D, the upper limit value and the lower limit value of the above-described ratio H/D can be arbitrarily combined. For example, a preferable range of the value of the ratio H/D may be 0.02 or more and 0.20 or less, 0.02 or more and 0.18 or less, or 0.05 or more and 0.15 or less. In addition, in configuring a preferable range of the value of the average depth H, the upper limit value and the lower limit value of the above-described average depth H can be arbitrarily combined. For example, a preferable range of the value of the average depth H may be 0.1 mm or more and 1.0 mm or less, 0.1 mm or more and 0.8 mm or less, or 0.2 mm or more and 0.5 mm or less.

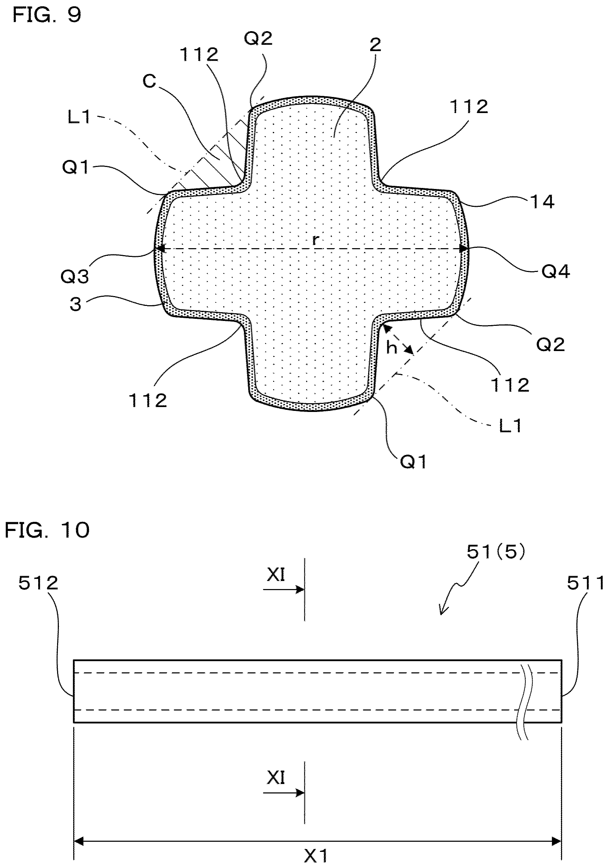

A method for calculating the average depth H per groove in the cut plane of the expanded beads is as follows. First, the expanded bead 1 is cut at the center in the axial direction in a plane perpendicular to the axial direction, and the cut plane such as shown in FIG. 4 and FIG. 9 is exposed. Next, a tangent line L1 that comes into contact with the outline of the expanded bead 1 at two points Q1 and Q2 and does not pass through the inside of the expanded bead 1 is drawn outside each groove 112 in the cut plane. Then, in a direction perpendicular to the tangent line L1, the maximum value h of the distance from the tangent line L1 to the peripheral edge (that is, the outline of the expanded bead) of the groove 112 is measured. The above-described maximum values h of the distances are measured for all of the grooves 112, and the arithmetic average value thereof is defined as the depth of the groove of each expanded bead. It is noted that the depth of the groove of each expanded bead in the cut plane can be measured by, for example, taking a photograph of the cut plane of the expanded bead and analyzing the image.

After that, the arithmetic average value of the depths of the grooves measured for 100 or more expanded beads 1 is defined as the depth H of the groove of the expanded beads.

[Method for calculating average cross-sectional area Ca per defective portion, total cross-sectional area Ct of defective portions, and average cross-sectional area A of expanded beads]

The ratio Ca/A of the average cross-sectional area Ca per defective portion to the average cross-sectional area A of the expanded bead in the cut plane obtained by cutting the expanded bead in the plane perpendicular to the axial direction at the center of the expanded bead in the axial direction is 0.01 or more and 0.20 or less, and the ratio Ct/A of the total cross-sectional area Ct of the defective portion(s) to the average cross-sectional area A of the expanded bead is 0.02 or more and 0.20 or less. As described above, the expanded bead having the above-described specific shape can improve the dimensional stability of the molded article. In addition, the expanded bead can significantly improve the productivity of the molded article and is capable of easily improving the surface properties and fusion bondability of the molded article.

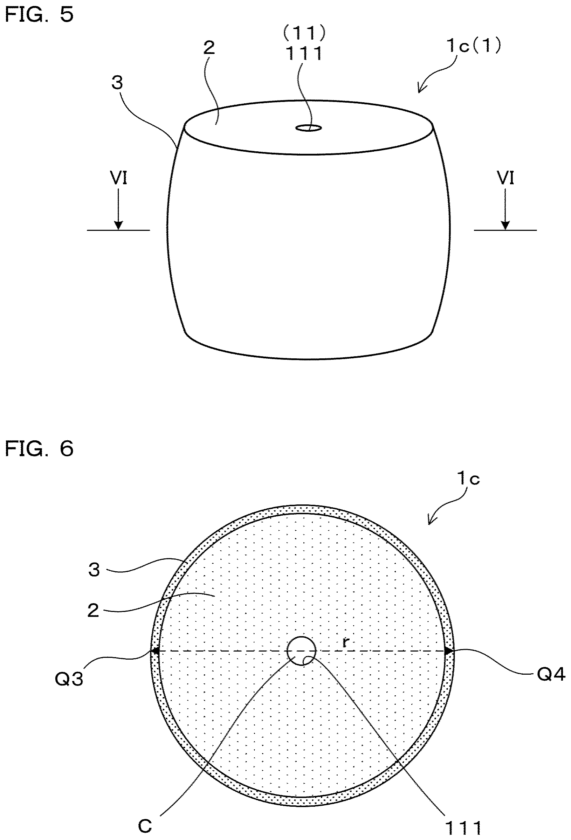

A method for calculating the average cross-sectional area A of the expanded bead is as follows. First, the expanded bead is cut in a plane perpendicular to the axial direction at the center in the axial direction thereof, and the cut plane is exposed. The cross-sectional area of the expanded bead 1 in the cut plane is measured. For example, as shown in FIG. 2 and FIG. 4, in a case where the expanded bead 1 consists of the foamed layer 2, the cross-sectional area of the expanded bead 1 is equal to the cross-sectional area of the foamed layer 2 in the cut plane. Alternatively, in a case where the expanded bead 1 has the foamed layer 2 and a cover layer 3 that covers the foamed layer 2 as shown in FIG. 6 described below, the cross-sectional area of the expanded bead 1 is the total of the cross-sectional area of the foamed layer 2 and the cross-sectional area of the cover layer 3 in the cut plane. The cross-sectional area of the expanded bead 1 in the cut plane can be measured by, for example, taking a photograph of the cut plane of the expanded bead and analyzing the image. In addition, the cross-sectional area of the defective portion is not included in the cross-sectional area of the expanded bead.

The above operation is performed on 100 or more expanded beads, and the arithmetic average value of the obtained cross-sectional areas of the expanded beads is defined as the average cross-sectional area A of the expanded bead in the cut plane.

A method for calculating the average cross-sectional area Ca per defective portion and the total cross-sectional area Ct of the defective portion(s) is as follows. First, the expanded bead is cut in a plane perpendicular to the axial direction at the center in the axial direction thereof, and the cut plane is exposed. In a case where the defective portion 11 is the through-hole 111 as shown in FIG. 2 and FIG. 6, the cross-sectional area C of the through-hole 111 in the cut plane is measured.

Next, in a case where the defective portion 11 is the groove 112 as shown in FIG. 4 and FIG. 9, the tangent line L1 that comes into contact with the outline of the expanded bead 1 at the two points Q1 and Q2 and does not pass through the inside of the expanded bead 1 is drawn outside each groove 112 in the cut plane. Then, the area of a region surrounded by the outline of the expanded bead 1 and the tangent line L1 is calculated, and this area is defined as the cross-sectional area C of each groove 112. That is, the cross-sectional area C of each groove 112 is the area of a region indicated by hatching in FIG. 4 and FIG. 9.

The total of the cross-sectional area of the defective portion(s) 11 in each expanded bead 1 is calculated by adding the cross-sectional area C of the through-hole 111 and the cross-sectional area C of the groove 112 thus obtained. The total of the cross-sectional area of the defective portion(s) 11 is divided by the number of the defective portion(s) 11 to calculate the cross-sectional area per defective portion in each expanded bead 1.

The above operation is performed on 100 or more expanded beads, and the arithmetic average value of the totals of the obtained cross-sectional areas of the defective portions is defined as the total cross-sectional area Ct of the defective portion(s). In addition, the average value of the obtained cross-sectional areas per defective portion is defined as the average cross-sectional area Ca per defective portion.

[Method for calculating average outer diameter D of expanded beads]

A method for calculating the average outer diameter D of the expanded beads is as follows. First, the expanded bead 1 is cut in a plane perpendicular to the axial direction at the center in the axial direction thereof, and the cut plane as shown in FIG. 2, FIG. 4, and the like is exposed. In this cut plane, two points Q3 and Q4 on the outline of the expanded bead 1 at which the distance between the two points becomes the longest are determined, and the distance (that is, the maximum outer diameter of the expanded bead in the cut plane) between these two points is defined as the outer diameter r of each expanded bead 1. Then, the arithmetic average value of the outer diameters r measured regarding 100 or more expanded beads 1 is defined as the average outer diameter D of the expanded beads. The outer diameter of the expanded bead 1 in the cut plane can be measured by, for example, taking a photograph of the cut plane of the expanded bead and analyzing the image. In addition, even in a case where the outer diameter of each expanded bead is not uniform in the penetration direction, the outer diameter of each expanded bead is determined by the outer diameter in the cut plane as described above.

[Apparent density and bulk density of expanded beads]

The bulk density of the expanded beads is preferably 10 kg/m$^3$ or more and 100 kg/m$^3$ or less, more preferably 15 kg/m$^3$ or more and 75 kg/m$^3$ or less, and still more preferably 20 kg/m$^3$ or more and 50 kg/m$^3$ or less. In addition, the apparent density of the expanded beads is preferably 15 kg/m$^3$ or more and 200 kg/m$^3$ or less, more preferably 20 kg/m$^3$ or more and 150 kg/m$^3$ or less, and still more preferably 30 kg/m$^3$ or more and 100 kg/m$^3$ or less. In these cases, it is possible to improve the lightweight and rigidity of the molded article in a well-balanced manner. In addition, conventionally, in particular in the case of producing a molded article having a low density (that is, a molded article having a high molded article magnification), the molded article is likely to be significantly deformed after being released from the mold, and it is difficult to omit the aging step. In contrast, since the expanded bead makes it possible to omit the aging step even in the case of producing a molded article having a low density, it is possible to produce a lightweight molded article having a good appearance even without aging.

The ratio of the apparent density of the expanded beads to the bulk density of the expanded beads (that is, apparent density/bulk density) is preferably more than 1.6 and more preferably 1.7 or more. In this case, the cooling time after in-mold molding can be further shortened, and a lightweight and good molded article can be more easily obtained. In addition, it is possible to more reliably inhibit the deformation and shrinkage of the molded article in the case of omitting the aging step or in the case of shortening the time of the aging step. In addition, the ratio of the apparent density of the expanded beads to the bulk density of the expanded beads (that is, apparent density/bulk density) is preferably less than 2.0 and more preferably 1.9 or less. In this case, it is possible to further shorten the drying time of the molded article. In addition, it is possible to make the surface properties and rigidity of a molded article to be obtained more favorable.

In configuring a preferable range of the value of the ratio of the apparent density of the expanded bead to the bulk density of the expanded bead, the upper limit value and the lower limit value of the above-described ratios can be arbitrarily combined. For example, a preferable range of the apparent density/bulk density value may be more than 1.6 and less than 2.0 or 1.7 or more and 1.9 or less.

A method for calculating the bulk density of the expanded bead is as follows. First, the expanded beads are left to stand under an environment of a relative humidity of 50%, a temperature of 23°C, and an atmospheric pressure of 1 atm for 24 hours or longer to condition the expanded beads. The expanded beads after conditioning are filled into a measuring cylinder so as to be naturally deposited, and the bulk volume (unit: L) of the expanded beads is read from the scale of the measuring cylinder. Then, the bulk density (unit: kg/m$^3$) of the expanded beads can be obtained by unit conversion of the value obtained by dividing the mass (unit: g) of the expanded beads in the measuring cylinder by the above-described bulk volume. It is noted that the bulk density of the expanded beads is a value measured under an environment of an atmospheric pressure of 1 atm using an expanded bead in a natural state which is not compressed.

A method for calculating the apparent density of the expanded beads is as follows. First, expanded beads are left to stand under an environment of a relative humidity of 50%, a temperature of 23°C, and an atmospheric pressure of 1 atm for one day to condition the expanded beads. After the mass (unit: g) of these expanded beads is measured, the expanded beads are immersed in alcohol (for example, ethanol) at 23°C contained in a measuring cylinder with a wire mesh or the like, and the volume (unit: L) of the expanded beads is determined from the increase in the liquid level. Thereafter, the apparent density (unit: kg/m$^3$) of the expanded beads can be calculated by unit conversion of the value obtained by dividing the mass of the expanded beads by the volume of the expanded beads.

[Foamed layer]

The expanded bead has a foamed layer made of a polypropylene-based resin. In the present specification, the polypropylene-based resin refers to a homopolymer of a propylene monomer and a propylene-based copolymer containing 50 mass% or more of a propylene-derived constituent unit. Preferable examples of the propylene-based copolymer include copolymers of propylene and an $\alpha$-olefin having 4 to 10 carbon atoms, such as an ethylene-propylene copolymer, a butene-propylene copolymer, a hexene-propylene copolymer, and an ethylene-propylene-butene copolymer. These copolymers may be, for example, random copolymers, block copolymers, or the like but are preferably random copolymers.

The polypropylene-based resin constituting the foamed layer contains a polypropylene-based resin (A) having a melting point of 135°C or higher and 150°C or lower and a flexural modulus of less than 1000 MPa, and a polypropylene-based resin (B) having a melting point of 145°C or higher and 160°C or lower and a flexural modulus of 1000 MPa or more. In addition, the mass ratio between the polypropylene-based resin (A) and the polypropylene-based resin (B) in the polypropylene-based resin is represented by polypropylene-based resin (A):polypropylene-based resin (B) = 65:35 to 35:65 (provided that the total amount of both is 100 mass%).

By using the polypropylene-based resin containing the polypropylene-based resin (A) and the polypropylene-based resin (B) in the specific mass ratio as the polypropylene-based resin constituting the foamed layer of the expanded bead, it is possible to easily improve the dimensional stability of the molded article and to reduce the dimensional change of the molded article from the time of release from the mold to the time when the shape is stabilized. In addition, by using such expanded beads, it is possible to easily obtain a molded article having a desired dimension even in the case of producing a molded article for which the degree of difficulty in in-mold molding is relatively high without performing the aging step or by shortening the time of the aging step.

[Polypropylene-based resin (A)]

The polypropylene-based resin (A) may be a homopolymer of a propylene monomer or a propylene-based copolymer. From the viewpoint of more reliably obtaining the effect of improving the dimensional stability of the molded article, the polypropylene-based resin (A) is preferably a propylene-based copolymer, more preferably one or more propylene-based copolymers selected from the group consisting of an ethylene-propylene copolymer, a butene-propylene copolymer, and an ethylene-butene-propylene copolymer, and still more preferably an ethylene-propylene random copolymer. The polypropylene-based resin (A) may be a virgin resin or a recycled resin. In addition, the polypropylene-based resin (A) may be a fossil fuel-derived resin or a resin containing a biomass-derived monomer component.

The total content of an ethylene component and a butene component in the polypropylene-based resin (A) is preferably 1.5 mass% or more and 4.5 mass% or less, more preferably 2.0 mass% or more and 3.5 mass% or less, and still more preferably more than 2.5 mass% and 3.5 mass% or less.

The above-described "ethylene component" means an ethylene-derived constituent unit in the propylene-based copolymer. In addition, the content of the ethylene component is the mass ratio of the ethylene component in a case where the total of a propylene-derived constituent unit and a constituent unit derived from other monomer contained in the propylene-based copolymer is set to 100 mass%. The content of the ethylene component in the propylene-based copolymer can be obtained based on the result of IR spectrum measurement.

In addition, the above-described "butene component" means a butene-derived constituent unit in the propylene-based copolymer. In addition, the content of the butene component is the mass ratio of the butene component in a case where the total of the propylene-derived constituent unit and a constituent unit derived from other monomer contained in the propylene-based copolymer is set to 100 mass%. The content of the butene component in the propylene-based copolymer can be obtained based on the result of IR spectrum measurement.

The flexural modulus of the polypropylene-based resin (A) is preferably 600 MPa or more and less than 1000 MPa, more preferably 700 MPa or more and less than 1000 MPa, still more preferably 800 MPa or more and less than 1000 MPa, and particularly preferably 900 MPa or more and 980 MPa or less. In this case, the moldability of the expanded bead can be more easily improved. The flexural modulus of the polypropylene-based resin (A) can be obtained in accordance with JIS K7171:2008.

The melting point of the polypropylene-based resin (A) is more preferably 136°C or higher and 148°C or lower, still more preferably 137°C or higher and 146°C or lower, particularly preferably 138°C or higher and 145°C or lower, and most preferably 140°C or higher and lower than 145°C. In this case, the moldability of the expanded bead can be more easily improved.

The melting point of the polypropylene-based resin (A) can be determined based on a DSC curve acquired by performing differential scanning calorimetry (that is, DSC) in accordance with JIS K7121-1987. First, a test piece is conditioned according to "(2) The case of measurement of melting temperature after a definite heat treatment". The heating rate and the cooling rate in the conditioning are set to 10°C/min. The conditioned test piece is heated from 30°C to 200°C at a heating rate of 10°C/min to acquire a DSC curve, and the vertex temperature of the melting peak appearing in the DSC curve is defined as the melting point of the polypropylene-based resin (A). In the case where two or more melting peaks appear in the DSC curve, the vertex temperature of the melting peak having the largest area is defined as the melting point of the polypropylene-based resin (A).

From the viewpoint of further improving the expandability and moldability of the expanded bead, the melt mass flow rate (that is, MFR) of the polypropylene-based resin (A) is preferably 5 g/10 min or more and 15 g/10 min or less, more preferably 6 g/10 min or more and 12 g/10 min or less, and still more preferably 7 g/10 min or more and 10 g/10 min or less. The MFR of the polypropylene-based resin (A) is a value measured under the conditions of a test temperature of 230°C and a load of 2.16 kg in accordance with JIS K7210-1:2014.

[Polypropylene-based resin (B)]

The polypropylene-based resin (B) may be a homopolymer of a propylene monomer or a propylene-based copolymer. From the viewpoint of more reliably obtaining the effect of improving the dimensional stability of the molded article, the polypropylene-based resin (B) is preferably a propylene-based copolymer and more preferably one or more propylene-based copolymers selected from the group consisting of an ethylene-propylene copolymer, a butene-propylene copolymer, and an ethylene-butene-propylene copolymer. In this case, it is possible to mold a molded article having excellent in appearance or rigidity at a lower molding temperature (that is, a low molding pressure). In addition, in this case, the shape of the molded article can be more easily recovered after the molded article is released from the mold, and the time of the aging step can be more easily shortened. It is noted that the polypropylene-based resin (B) may be a virgin resin or a recycled resin. In addition, the polypropylene-based resin (B) may be a fossil fuel-derived resin or a resin containing a biomass-derived monomer component.

From the viewpoint of further enhancing the above-described effect, the total content of the ethylene component and the butene component in the polypropylene-based resin (B) is preferably 0.5 mass% or more and 2.5 mass% or less, more preferably 0.5 mass% or more and less than 2.5 mass%, still more preferably 0.8 mass% or more and 2.0 mass% or less, and particularly preferably 1.0 mass% or more and 1.8 mass% or less.

The flexural modulus of the polypropylene-based resin (B) is preferably 1000 MPa or more and 1800 MPa or less, more preferably 1050 MPa or more and 1700 MPa or less, still more preferably 1100 MPa or more and less than 1600 MPa, and particularly preferably 1150 MPa or more and 1500 MPa or less. In this case, it is possible to further enhance the effect of improving the dimensional stability of the molded article. From the same viewpoint, the absolute value of the difference between the flexural modulus of the polypropylene-based resin (A) and the flexural modulus of the polypropylene-based resin (B) is preferably 200 MPa or more and 500 MPa or less. The flexural modulus of the polypropylene-based resin (B) can be obtained in accordance with JIS K7171:2008.

The melting point of the polypropylene-based resin (B) is more preferably 148°C or higher and 158°C or lower and still more preferably 150°C or higher and 155°C or lower. In this case, it is possible to further enhance the effect of improving the dimensional stability of the molded article.

A method for measuring the melting point of the polypropylene-based resin (B) is the same as the above-described method for measuring the melting point of the polypropylene-based resin (A), except that the polypropylene-based resin (B) is used instead of the polypropylene-based resin (A).

[Mass ratio between polypropylene-based resin (A) and polypropylene-based resin (B)]

The mass ratio between the polypropylene-based resin (A) and the polypropylene-based resin (B) in the polypropylene-based resin constituting the foamed layer is polypropylene-based resin (A):polypropylene-based resin (B) = 65:35 to 35:65 (provided that the total amount of both is set to 100 mass%). That is, the mass ratio of the polypropylene-based resin (A) with respect to a total of 100 mass% of the polypropylene-based resin (A) and the polypropylene-based resin (B) is 35 mass% or more and 65 mass% or less.

By setting the mass ratio between the polypropylene-based resin (A) and the polypropylene-based resin (B) in the expanded bead within the above-described specific range, it is possible to improve the dimensional stability of the molded article and to reduce the dimensional change from the time of release from the mold to the time when the shape is stabilized. Therefore, even in a case where a molded article for which the degree of difficulty in in-mold molding is relatively high, such as a molded article having a relatively long maximum length or a molded article having a complicated shape, is produced by omitting the aging step or shortening the time of the aging step, a molded article having a desired dimension can be easily obtained.

In a case where the mass ratio of the polypropylene-based resin (A) is less than 35 mass% with respect to 100 mass% of the total of the polypropylene-based resin (A) and the polypropylene-based resin (B), the molding pressure during in-mold molding is likely to be excessively high. In addition, in this case, the secondary expandability during in-mold molding is likely to decrease in particular when a molded article having a long maximum length or a molded article having a complicated shape is produced, and there is a concern that the appearance of the molded article may deteriorate.

By setting the mass ratio of the polypropylene-based resin (A) to 35 mass% or more, preferably 38 mass% or more, more preferably 40 mass% or more, still more preferably 45 mass% or more, particularly preferably 50 mass% or more, and most preferably 55 mass% or more with respect to 100 mass% of the total of the polypropylene-based resin (A) and the polypropylene-based resin (B), it is possible to easily avoid such problems and to easily obtain a molded article having a good appearance.

In a case where the mass ratio of the polypropylene-based resin (A) exceeds 65 mass% with respect to 100 mass% of the total of the polypropylene-based resin (A) and the polypropylene-based resin (B), there is a concern that the dimensional stability of the molded article may deteriorate. In addition, in particular in the case of producing a molded article for which the degree of difficulty in in-mold molding is relatively high, the dimensional change from the time when the molded article is released from the mold to the time when the shape is stabilized becomes larger, and there is a possibility that it becomes difficult to adjust the dimension of the molded article to be within a desired range. By setting the mass ratio of the polypropylene-based resin (A) to 65 mass% or less, preferably 64 mass% or less, more preferably 63 mass% or less, still more preferably 62 mass% or less, and particularly preferably 61 mass% or less with respect to 100 mass% of the total of the polypropylene-based resin (A) and the polypropylene-based resin (B), these problems can be easily avoided, and the dimensional stability of the molded article can be improved.

In configuring a preferable range of the mass ratio between the polypropylene-based resin (A) and the polypropylene-based resin (B), the upper limits and the lower limits of the above-described mass ratios between the polypropylene-based resin (A) and the polypropylene-based resin (B) can be arbitrarily combined. For example, the mass ratio between the polypropylene-based resin (A) and the polypropylene-based resin (B) may be polypropylene-based resin (A):polypropylene-based resin (B) = 65:35 to 38:62, 64:36 to 40:60, 63:37 to 45:55, 62:38 to 50:50, or 61:39 to 55:45 (provided that the total amount of both is 100 mass%).

[Other polymers]

The polypropylene-based resin constituting the foamed layer may contain a polymer other than the polypropylene-based resin (A) and the polypropylene-based resin (B) to an extent that the above-described effects are not impaired. Examples of other polymers include thermoplastic resins such as polypropylene-based resins that are neither the polypropylene-based resin (A) nor the polypropylene-based resin (B), polyethylene-based resins, polyamide resins, and polystyrene-based resin, elastomers, and the like. The amount of other polymers contained in the foamed layer is preferably 20 mass% or less, more preferably 10 mass% or less, still more preferably 5 mass% or less, and particularly preferably 0 mass%, that is, the foamed layer substantially contains only the polypropylene-based resin (A) and the polypropylene-based resin (B) as polymers.

In addition, the polypropylene-based resin constituting the foamed layer may contain additives such as an cell controlling agent, a crystal nucleating agent, a flame retardant, a flame retardant aid, a plasticizer, an antistatic agent, an antioxidant, an ultraviolet inhibitor, a light stabilizer, a conductive filler, an antibacterial agent, and a colorant to an extent that the above-described action and effect are not impaired. The amount of the additives contained in the foamed layer is, for example, preferably 0.01 parts by mass or more and 10 parts by mass or less with respect to 100 parts by mass of the polypropylene-based resin.

The colorant contained in the polypropylene-based resin constituting the foamed layer is preferably carbon black. In this case, it is possible to impart a luxurious appearance to the molded article. The amount of carbon black in the foamed layer is preferably 0.1 mass% or more and 5 mass% or less, more preferably 0.5 mass% or more and 4 mass% or less, and still more preferably 1 mass% or more and 3.5 mass% or less.

[Cover layer]

The expanded bead may have the foamed layer and further a cover layer that is made of a thermoplastic resin and covers the foamed layer. In this case, the cover layer may cover the entire surface of the foamed layer or may cover a part of the foamed layer. For example, the cover layer 3 may be provided on the side peripheral surface of the expanded bead 1 (1c) and cover the foamed layer 2 as shown in FIG. 5 and FIG. 6.

The cover layer is a layer provided on the surface of the expanded bead in order to improve fusion bondability between the expanded beads in in-mold molding. The thermoplastic resin constituting the cover layer preferably has a lower melting point or a lower softening point than the melting point of the polypropylene-based resin constituting the foamed layer.

The thermoplastic resin constituting the cover layer may be a crystalline thermoplastic resin or an amorphous thermoplastic resin. Examples of the crystalline thermoplastic resin used for the cover layer include polyolefin-based resins and the like. Examples of the amorphous thermoplastic resin used for the cover layer include polystyrene-based resins and the like. From the viewpoint of adhesion to the foamed layer, the thermoplastic resin constituting the cover layer is preferably a polyolefin-based resin, more preferably a polyethylene-based resin and/or a polypropylene-based resin, and still more preferably a polypropylene-based resin. Examples of the polypropylene-based resin used for the cover layer include an ethylene-propylene copolymer, a propylene-butene copolymer, an ethylene-propylene-butene copolymer, a propylene homopolymer, and the like. Among these, the cover layer is particularly preferably made of an ethylene-propylene copolymer and/or an ethylene-propylene-butene copolymer.

In a case where the cover layer is made of a crystalline polyolefin-based resin, the melting point of the crystalline polyolefin-based resin is preferably 110°C or higher and 150°C or lower, more preferably 120°C or higher and 145°C or lower, and still more preferably 125°C or higher and 142°C or lower.

In addition, the difference [Tmc - Tms] between the melting point Tmc of a base resin constituting the foamed layer and the melting point Tms of the crystalline polyolefin-based resin constituting the cover layer is preferably 1°C or more and 40°C or less, more preferably 2°C or more and 35°C or less, and still more preferably 5°C or more and 30°C or less. In this case, it is possible to more easily improve the in-mold moldability of the expanded bead even in a case where the molding pressure is relatively low.

The thermoplastic resin constituting the cover layer may contain additives such as a crystal nucleating agent, a flame retardant, a flame retardant aid, a plasticizer, an antistatic agent, an antioxidant, an ultraviolet inhibitor, a light stabilizer, a conductive filler, an antibacterial agent, and a colorant to an extent that the above-described action and effect are not impaired. The amount of the additives contained in the cover layer is, for example, preferably 0.01 parts by mass or more and 10 parts by mass or less with respect to 100 parts by mass of the thermoplastic resin.

The colorant contained in the thermoplastic resin constituting the cover layer is preferably carbon black. In this case, it is possible to impart a luxurious appearance to the molded article. The amount of carbon black contained in the cover layer is preferably 0.1 mass% or more and 5 mass% or less, more preferably 0.5 mass% or more and 4 mass% or less, and still more preferably 1 mass% or more and 3.5 mass% or less.

In addition, the melt mass flow rate of the thermoplastic resin constituting the cover layer that is measured under the conditions of a temperature of 230°C and a load of 2.16 kg in accordance with JIS K7210-1:2014 is preferably higher than 15 g/10 min. In this case, it is possible to inhibit the formation of a streaky pattern on the surface of the molded article without impairing the rigidity of the foamed layer. The upper limit of the melt mass flow rate of the thermoplastic resin constituting the cover layer that is measured under the conditions of a temperature of 230°C and a load of 2.16 kg in accordance with JIS K7210-1:2014 is about 35 g/10 min.

The cover layer of the expanded bead may be in a foamed state or in a non-foamed state, but is preferably in a substantially non-foamed state. The term "substantially non-foamed" includes a state where the cover layer is not foamed and no cells are contained and a state where cells disappear after foaming, and means that there are almost no cell structures in the cover layer. The thickness of the cover layer is, for example, 0.5 μm or more and 100 μm or less. In addition, an intermediate layer may further be provided between the foamed layer and the cover layer.

The mass ratio (ratio of mass%) between the polypropylene-based resin constituting the foamed layer and the thermoplastic resin constituting the cover layer is preferably foamed layer:cover layer = 99.5:0.5 to 80:20, more preferably 99:1 to 85:15, and still more preferably 97:3 to 88:12 from the viewpoint of improving the moldability while maintaining the rigidity of the molded article.

[High-temperature peak]

The expanded bead preferably has a crystal structure in which a resin intrinsic peak, derived from the melting of a crystal intrinsic to the polypropylene-based resin constituting the foamed layer, and a high-temperature peak, having a vertex temperature higher than the vertex temperature of the resin intrinsic peak, appear in a DSC curve obtained when the expanded bead is heated from 23°C to 200°C at a heating rate of 10°C/min. The expanded bead having such a crystal structure is excellent in terms of mechanical strength and is also excellent in terms of moldability. It is noted that the resin intrinsic peak is generated by endotherm when the crystal originally possessed by the polypropylene-based resin constituting the foamed layer melts. On the other hand, the high-temperature peak is presumed to be generated by the melting of secondary crystals formed in the polypropylene-based resin constituting the foamed layer during the process of producing the expanded beads. That is, in a case where the high-temperature peak appears in the DSC curve, it is presumed that secondary crystals have been formed in the polypropylene-based resin.

It is sufficient to determine whether the expanded beads have the above-described crystal structure on the basis of a DSC curve obtained by performing differential scanning calorimetry (DSC) under the above-described conditions in accordance with JIS K7121:1987. In performing DSC, 1 to 3 mg of the expanded beads may be used as a sample.

Specifically, in the DSC curve obtained by heating the expanded bead from 23°C to 200°C at a heating rate of 10°C/min (that is, first heating) as described above, both the high-temperature peak and the resin intrinsic peak of the polypropylene-based resin constituting the foamed layer appear. That is, in the DSC curve obtained from the first heating, the resin intrinsic peak appears in addition to the high-temperature peak. On the other hand, in a DSC curve obtained by performing the first heating, then cooling the expanded bead from 200°C to 23°C at a cooling rate of 10°C/min, and subsequently heating the expanded bead from 23°C to 200°C again at a heating rate of 10°C/min (that is, second heating), only the resin intrinsic peak of the polypropylene-based resin constituting the foamed layer appears. Therefore, the resin intrinsic peak and the high-temperature peak can be distinguished by comparing the DSC curve obtained from the first heating and the DSC curve obtained from the second heating. The temperature for the peak of this resin intrinsic peak may be slightly different between the first heating and the second heating, but the difference is usually within 5°C.

The heat of fusion at the high-temperature peak of the expanded bead is preferably 8 J/g or more and 25 J/g or less, more preferably 10 J/g or more and 24 J/g or less, still more preferably 15 J/g or more and 23 J/g or less, and particularly preferably 18 J/g or more and 22 J/g or less from the viewpoint of further improving the moldability of the expanded bead, obtaining a molded article with superior rigidity, and further improving the dimensional stability in obtaining a molded article for which the degree of difficulty in in-mold molding is relatively high.

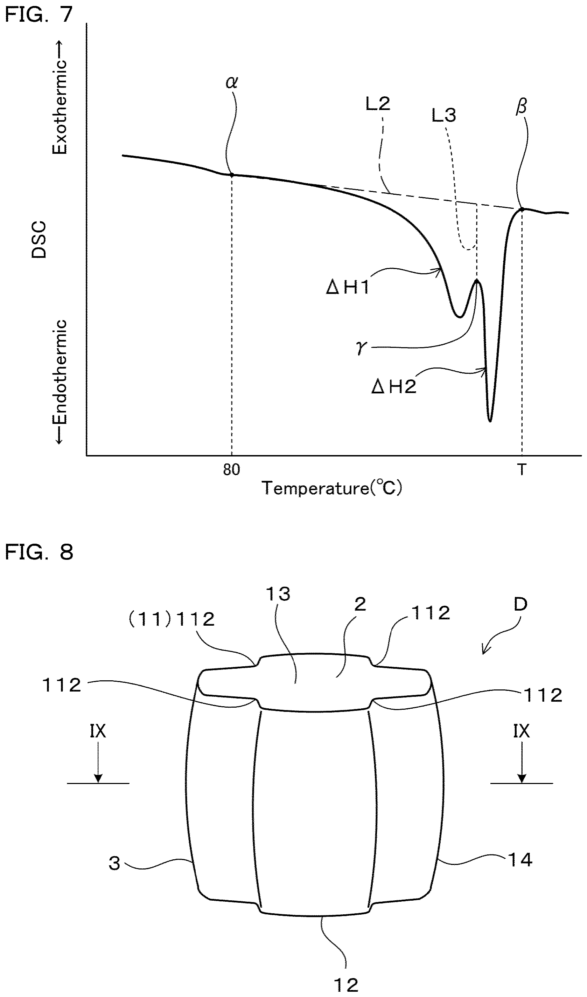

The above-described heat of fusion of the high-temperature peak is a value obtained as follows. First, 1 to 3 mg of the expanded beads having after conditioning are used as a sample, and differential scanning calorimetry is performed under the condition of heating from 23°C to 200°C at a heating rate of 10°C/min to obtain a DSC curve. An example of the DSC curve is shown in FIG. 7. When the expanded bead has a high-temperature peak, as shown in FIG. 7, a resin intrinsic peak $\Delta H1$ and a high-temperature peak $\Delta H2$, whose peak appears on the higher-temperature side of the resin intrinsic peak $\Delta H1$, are observed in the DSC curve.

Next, a straight line L2 connecting a point α corresponding to 80°C on the DSC curve and a point β corresponding to the melting end temperature T of the expanded bead is drawn. The melting end temperature T is defined as the end point of the high-temperature peak ΔH2 on the high temperature side, that is, the intersection of the high-temperature peak ΔH2 and the baseline on the high temperature side of the high-temperature peak ΔH2 in the DSC curve.

After drawing the straight line L2, a straight line L3 that passes through the maximum point γ present between the resin intrinsic peak ΔH1 and the high-temperature peak ΔH2 and is parallel to the vertical axis of the graph is drawn. This straight line L3 divides the resin intrinsic peak ΔH1 and the high-temperature peak ΔH2. The heat of fusion of the resin intrinsic peak ΔH1 can be calculated based on the area enclosed by a portion constituting the resin intrinsic peak ΔH1 in the DSC curve, the straight line L2, and the straight line L3. In addition, the heat of fusion of the high-temperature peak ΔH2 can be calculated based on the area enclosed by a portion constituting the high-temperature peak ΔH2 in the DSC curve, the straight line L2, and the straight line L3.

(Method for producing polypropylene-based resin expanded beads)

The expanded beads can be produced by, for example, a method in which polypropylene-based resin particles (hereinafter referred to as "resin particles"), which are made of a polypropylene-based resin, are dispersed in a dispersion medium and impregnated with a blowing agent, and then the resin particles containing the blowing agent are released together with the dispersion medium under low pressure. Such an expanding (foaming) method is sometimes referred to as "direct foaming method".

The resin particles can be prepared by, for example, a strand cutting method. In the strand cutting method, first, the polypropylene-based resin (A) and the polypropylene-based resin (B) constituting the foamed layer, and additives such as a cell nucleating agent supplied as necessary are supplied into an extruder, and heated and kneaded to obtain a resin melt-kneaded product. Thereafter, the resin melt-kneaded product is extruded from a small hole of a die attached to the tip of the extruder to form an extrudate. This extrudate is then cooled and cut to a desired length to obtain a resin particle having a single layer structure composed of a core layer containing the polypropylene-based resin as a base resin.

In order to obtain expanded beads each having a multilayer structure including a foamed layer and a cover layer, resin particles each having a multilayer structure may be prepared using a coextrusion apparatus provided with an extruder for forming a core layer, an extruder for forming a cover layer, and a coextrusion die connected to these two extruders. In this case, in the extruder for forming the core layer, the polypropylene-based resin (A) and the polypropylene-based resin (B) constituting the foamed layer, and additives or the like added as necessary are melt-kneaded to prepare a resin melt-kneaded product for forming the core layer. In addition, in the extruder for forming the cover layer, the thermoplastic resin constituting the cover layer and additives or the like added as necessary are melt-kneaded to prepare a resin melt-kneaded product for forming the cover layer.

These resin melt-kneaded products are co-extruded and joined together in the die to form a composite having a multilayer structure composed of a non-foamed core layer and a non-foamed cover layer covering the outer surface of the core layer. This composite is extruded from a small hole of the die to form an extrudate. This extrudate is cooled and then cut to a desired length to obtain a resin particle having a multilayer structure. The method for producing the resin particle is not limited to the above-described method, and a hot cutting method, an underwater cutting method, or the like may be employed.

In the direct foaming method, the resin particles are foamed while substantially maintaining the shape of the resin particle. Therefore, the shape of the expanded beads obtained by the direct foaming method becomes a shape obtained by substantially enlarging the shape of the resin particle. Therefore, in order to obtain tubular expanded beads each having a through-hole, it is sufficient to foam tubular resin particles each having a through-hole. Such resin particles can be produced, for example, by using a die having an annular small hole corresponding to the shape of a cut plane of the desired resin particle in the strand cutting method.

Similarly, in order to obtain expanded beads each having a cross-like shape in a cross section at the cut plane, it is sufficient to foam a columnar resin particle having a cross-like shape in a cross section at the cut plane. Such resin particles can be produced, for example, by using a die having a cross-shaped small hole corresponding to the shape of a cut plane of the desired resin particles in the strand cutting method.

In preparing the resin particles, it is preferable to employ the strand cutting method in which an extrudate is cooled in water and then cut. In this case, the accuracy of the shape of the resin particle can be further increased, and the shape of the defective portions in expanded beads eventually obtained can be more easily controlled to a desired shape. According to the strand cutting method, the extrusion direction of the extrudate for producing the resin particles becomes the axial direction of the resin particles. The axial direction of the expanded beads corresponds to the axial direction of the resin particles used in their production.

The particle size of the resin particles is preferably 0.1 mm or more and 3.0 mm or less, and more preferably 0.3 mm or more and 1.5 mm or less. In addition, the ratio of the length to the outer diameter of the resin particles is preferably 0.5 or more and 5.0 or less, and more preferably 1.0 or more and 3.0 or less.

In addition, the average mass per resin particles is preferably 0.1 mg or more and 20 mg or less, more preferably 0.2 mg or more and 10 mg or less, still more preferably 0.3 mg or more and 5 mg or less, and particularly preferably 0.4 mg or more and 2 mg or less. The average mass per resin particle is obtained by dividing the total mass of 200 resin particles randomly selected by the number of the resin particles.

In a case where the resin particle has a core layer and a cover layer, the mass ratio between the core layer and the cover layer is preferably core layer:cover layer = 99.5:0.5 to 85:15, more preferably 99:1 to 92:8, and still more preferably 97:3 to 90:10.

In expanded beads having through-holes, by adjusting the average hole diameter dr of the through-holes in the core layers in the resin particles, the average hole diameter d of the through-holes in the foamed layers can be adjusted to fall within the specific range. More specifically, by setting the average hole diameter dr of the through-holes of the resin particles to 0.10 mm or more and less than 0.25 mm, preferably 0.12 mm or more and less than 0.24 mm, and more preferably 0.15 mm or more and less than 0.22 mm, expanded beads having through-holes with an average hole diameter d of the of 0.1 mm or more and less than 1 mm can be easily produced. The average hole diameter dr of the through-holes in the core layers of the resin particles can be adjusted, for example, by the hole diameter (that is, the inner diameter of a die) of a small hole of the die for forming the through-holes.

In addition, by adjusting the particle diameter and average mass of the resin particles, the average outer diameter of the expanded beads can be adjusted to fall within the above-described range. More specifically, by setting the ratio dr/Dr of the average hole diameter dr of the through-holes to the average outer diameter Dr of the resin particles to 0.4 or less, preferably 0.3 or less, more preferably 0.25 or less, and still more preferably 0.2 or less, expanded beads having the ratio d/D of the average hole diameter d of the through-holes to the average outer diameter D of the expanded beads of 0.4 or less can be easily produced. From the viewpoint of the production stability of the resin particles, the average hole diameter dr of the through-holes of the resin particles is preferably 0.1 mm or more, and the ratio dr/Dr of the average hole diameter dr of the through-holes to the average outer diameter Dr of the resin particles is preferably 0.1 or more.

The method for calculating the average hole diameter dr of the through-holes of the resin particles and the average outer diameter Dr of the resin particles is the same as the above-described method for calculating the average hole diameter d of the through-holes of the expanded beads and the average outer diameter D of the expanded beads, except that the resin particles are used instead of the expanded beads.

In the case of employing the strand cutting method, that is, a method in which a cylindrical extrudate extruded from a die is cooled in water while being taken up and then cut to an appropriate length, the particle diameter, the length/outer diameter ratio, and average mass of the resin particles can be adjusted by appropriately changing the extrusion rate, the take-up rate, the cutter speed, and the like during extrusion of the resin melt-kneaded product.

After the resin particles are prepared as described above, the resin particles are dispersed in a dispersion medium. The operation of dispersing the resin particles in the dispersion medium may be performed in a sealed container used in a foaming step described below, or may be performed in a container different from the sealed container used in the foaming step. From the viewpoint of simplification of production process, it is preferable to perform the dispersion step in the sealed container used in the foaming step.

As the dispersion medium, an aqueous dispersion medium containing water as a main component is used. The aqueous dispersion medium may contain, in addition to water, a hydrophilic organic solvent such as ethylene glycol, glycerin, methanol, or ethanol. The ratio of water in the aqueous dispersion medium is preferably 60 mass% or more, more preferably 70 mass% or more, and still more preferably 80 mass% or more.

It is preferable to add a dispersant into the dispersion medium. By adding the dispersant into the dispersion medium, fusion-bonding between the resin particles heated in the container can be inhibited in the foaming step. The addition amount of the dispersant is preferably 0.001 parts by mass or more and 5 parts by mass or less per 100 parts by mass of the resin particles. As the dispersant, an organic dispersant or an inorganic dispersant can be used, but it is preferable to use a finely particulate inorganic substance as the dispersant from the viewpoint of ease of handling. More specifically, as the dispersant, it is possible to use, for example, clay minerals such as amsnite, kaolin, mica, and clay, aluminum oxide, titanium oxide, basic magnesium carbonate, basic zinc carbonate, calcium carbonate, iron oxide, and the like. These dispersants may be used alone, or two or more kinds of dispersants may be used in combination. Among them, a clay mineral is preferably used as the dispersant. The clay mineral may be a natural clay mineral or a synthetic clay mineral.

In the case of using the dispersant, it is preferable to use an anionic surfactant as a dispersion aid in combination, such as sodium dodecylbenzenesulfonate, sodium alkylbenzenesulfonate, sodium lauryl sulfate, or sodium oleate. The addition amount of the dispersion aid is preferably 0.001 parts by mass or more and 1 part by mass or less per 100 parts by mass of the resin particles.

After the resin particles are dispersed in the dispersion medium, the resin particles are impregnated with a blowing agent in a sealed container. The blowing agent to be impregnating into the resin particles is preferably a physical blowing agent. Examples of the physical blowing agent include inorganic physical blowing agents such as carbon dioxide, air, nitrogen, helium, and argon, and organic physical blowing agents such as aliphatic hydrocarbons including propane, butane, and hexane, cyclic aliphatic hydrocarbons including cyclopentane and cyclohexane, and halogenated hydrocarbons including chlorofluoromethane, trifluoromethane, 1,1-difluoromethane, 1-chloro-1,1-dichloroethane, 1,2,2,2-tetrafluoroethane, methyl chloride, ethyl chloride, and methylene chloride. These physical blowing agents may be used alone, or two or more physical blowing agents may be used in combination. Further, the inorganic physical blowing agent and the organic physical blowing agent can be mixed and used. From the viewpoint of an environmental load and handleability, it is preferable to use an inorganic physical blowing agent, and it is more preferable to use carbon dioxide.

The addition amount of the blowing agent with respect to 100 parts by mass of the resin particles is preferably 0.1 parts by mass or more and 30 parts by mass or less and more preferably 0.5 parts by mass or more and 15 parts by mass or less.

In the production process of the expanded bead, as a method for impregnating the resin particles with the blowing agent, it is possible to employ a method in which the blowing agent is supplied into a sealed container, and the resin particles in the dispersion medium are impregnated with the blowing agent by increasing the pressure in the sealed container. At this time, the impregnation of the resin particles with the blowing agent can be further promoted by heating the resin particles together with the dispersion medium.

The pressure in the sealed container during foaming is preferably 0.5 MPa (G) or more in terms of gauge pressure. On the other hand, the pressure in the sealed container is preferably 4.0 MPa (G) or less in terms of gauge pressure. Within the above-described range, expanded beads can be produced safely without the risk of breakage, explosion, or the like of the sealed container.

In addition, in the case of heating the dispersion medium, by setting the heating rate of the dispersion medium within a range of 1°C/min or more and 5°C/min or less, the temperature during foaming can also be set to be within an appropriate range.

After the impregnation of the resin particles with the blowing agent is completed, the contents in the sealed container are released to an environment having a lower pressure than the sealed container. As a result, the core layer of the resin particle is foamed to form a cell structure and the cell structure is stabilized by being cooled with the external air to obtain the expanded beads.

When the core layer is impregnated with the blowing agent, it is preferable to heat and expand (foam) the core layer in the following aspect. That is, first, a first-stage holding step of holding the core layer at a temperature of (the melting point of the resin particle - 20°C) or higher and lower than (the melting end temperature of the resin particles) for a sufficient time, preferably about 10 to 60 minutes, is performed. Then the temperature is adjusted to a temperature from (the melting point of the resin particle - 15°C) to lower than (the melting end temperature of the resin particle + 10°C). Subsequently, a second-stage holding step of further holding the core layer at that temperature for a sufficient time, preferably about 10 to 60 minutes, is performed if necessary. After that, it is preferable to release the contents of the sealed container to the outside while the temperature in the sealed container is maintained at (the melting point of the resin particle - 10°C) or higher, so that the resin particle is foamed. The temperature in the sealed container during foaming is more preferably (the melting point of the resin particle) or higher and (the melting point of the resin particle + 20°C) or lower. By heating and foaming the resin particle in this manner, secondary crystals are formed in the polypropylene-based resin constituting the foamed layer, and an expanded bead having excellent mechanical strength and excellent moldability can be easily obtained.

It is noted that the method for measuring the melting point of the resin particle is the same as the above-described method for measuring the melting point of the polypropylene-based resin (A), except that resin particle is used instead of the polypropylene-based resin (A). In addition, the melting end temperature of the resin particle is the temperature at the end point on the high temperature side in the DSC curve obtained in the measurement of the melting point of the resin particle, that is, the intersection point between the melting peak and the baseline on the high temperature side of the melting peak.

In the production of the molded article, the expanded beads obtained as described above may be used as they are. Alternatively, the molded article can also be produced using expanded beads having an increased bulk ratio by further expanding the expanded beads obtained by the above-described direct foaming method. In the case where the resin particles are expanded in two stages as described above, the expanding step of the first stage is referred to as a first expanding (foaming) step, and the expanded beads obtained by the first expanding step are referred to as first-step expanded beads. The expanding step of the second stage is referred to as a second expanding step. The expanded beads obtained through the second expanding step are sometimes referred to as second-step expanded beads.

A method for increasing the bulk ratio of the expanded beads by two-step expanding is, for example, as follows. First, as the first expanding step, the resin particles are foamed by the above-described direct foaming method to obtain first-step expanded beads. Thereafter, an internal pressure is imparted to the first-step expanded beads. More specifically, the first-step expanded beads are placed in a pressure-resistant container, and the inside of the pressure-resistant container is pressurized with air or an inorganic gas such as carbon dioxide to impregnate the expanded beads with the inorganic gas. This makes the pressure inside the cells of the first-step expanded beads equal to or higher than the atmospheric pressure. Then, the first-step expanded beads taken out from the pressure-resistant container are heated using a heating medium such as steam or heated air under an environment at a pressure lower than the pressure inside the cells, thereby further expanding the first-step expanded bead.

(Molded article of polypropylene-based resin expanded beads)

A molded article of polypropylene-based resin expanded beads can be obtained by in-mold molding of the expanded beads. The molded article obtained by in-mold molding of the expanded beads has an open cell structure. The open cell structure is a minute space portion communicating with the outside of the molded article. The open cell structure is formed by being complicatedly connected together with voids formed by a plurality of the defective portions in the expanded beads, such as through-holes or grooves, communicating with one another, voids formed by the defective portions in the expanded beads and voids formed between the expanded beads communicating with one another, voids formed by voids between the expanded beads communicating with one another, open cell portions in the expanded beads constituting the molded article, and the like.

The density of the molded article is preferably 10 kg/m$^3$ or more and 150 kg/m$^3$ or less. In this case, the lightweight and rigidity of the molded article can be improved in a well-balanced manner. From the viewpoint of further improving the rigidity of the molded article, the density of the molded article is more preferably 15 kg/m$^3$ or more, still more preferably 18 kg/m$^3$ or more, and particularly preferably 20 kg/m$^3$ or more. From the viewpoint of further improving the lightweight of the molded article, the density of the molded article is more preferably 100 kg/m$^3$ or less, still more preferably 60 kg/m$^3$ or less, particularly preferably 50 kg/m$^3$ or less, and most preferably 45 kg/m$^3$ or less. The density of the molded article is calculated by dividing the mass (unit: g) of the molded article by the volume (unit: L) obtained from the outer dimension of the molded article and converting the unit. It is noted that, for example, in a case where the molded article at least partially has a complicated shape and it is not easy to obtain the volume from the outer dimension of the molded article, the volume of the molded article can be obtained by a submersion method.

In configuring a preferable range of the density of the molded article, the upper limit value and the lower limit value of the above-described densities of the molded article can be arbitrarily combined. For example, a preferable range of the density of the molded article may be 10 kg/m$^3$ or more and 100 kg/m$^3$ or less, 15 kg/m$^3$ or more and 60 kg/m$^3$ or less, 18 kg/m$^3$ or more and 50 kg/m$^3$ or less, or 20 kg/m$^3$ or more and 45 kg/m$^3$ or less.

Conventionally, in the case of producing a molded article having a low density, it has been particularly difficult to omit the aging step because the molded article is likely to significantly deform after being released from the mold. In contrast, the molded article obtained by the in-mold molding of the expanded beads allows omission of the aging step even in a case where the density is low, while still having a desired shape and exhibiting excellent appearance and rigidity. From the viewpoint of effectively realizing this effect, it is preferable that the density of the molded article be within the above-described range.

The shape of the molded article is not particularly limited, and various shapes can be taken according to the application. The maximum length of the molded article, that is, the maximum value of the length in the case of measuring the lengths of the molded article in various directions is preferably 600 mm or more. Conventionally, such a long molded article is likely to shrink after being released from the mold, it was thus particularly difficult to omit the aging step or shorten the time of the aging step. In contrast, since the molded article is composed of the expanded beads having the specific shape and including the foamed layer made of the specific polypropylene-based resin, as described above, the molded article has excellent dimensional stability, and it is possible to reduce the dimensional change of the molded article from the time of release from the mold to the time when the shape is stabilized. Therefore, even in a case where the molded article has a relatively long maximum length of, for example, 600 mm or more, it is possible to reduce the dimensional change of the molded article after being released from the mold. As a result, even in a case where the aging step is omitted or the time of the aging step is shortened, a molded article having desired dimensions can be easily obtained. The molded article having such a shape can be used in applications such as an automotive bumper core, an automotive tool box, and an automobile seat core.

The molded article can be used in a wide range of applications, for example, a sound absorbing material, an impact absorbing material, and a cushioning material in various fields such as a vehicle field including an automobile or the like, and a building field. From the viewpoint of more effectively using the excellent dimensional stability due to the expanded beads, the molded article is preferably constituted as an automotive bumper core or an automotive tool box.

Since an automotive bumper core has a shape having a maximum length longer than the cross-sectional area thereof, there is a problem in that the dimensional change of the molded article after being released from the mold is likely to become large. In addition, since the automotive tool box has a complicated shape including at least one recessed portion for accommodating a tool and a wall portion erected around the recessed portion, there is a problem in that the wall portion is likely to be distorted due to the dimensional change of the molded article after being released from the mold. In contrast, the molded article is composed of the expanded beads, and thus the dimensional stability can be improved even in a case where such a molded article having a long maximum length or a molded article having a complicated shape is produced. Therefore, the automotive bumper core and the automotive tool box composed of the expanded beads have high dimensional accuracy.

(Method for producing molded article of polypropylene-based resin expanded beads)

In preparing the molded article, for example, in-mold molding may be performed by supplying steam as a heating medium into the mold after the expanded beads are filled into the mold. Specifically, first, the expanded beads are filled into a mold having a molding cavity corresponding to a desired shape of the molded article. As a method for filling the expanded beads, a method such as a cracking filling method or a compression filling method can be adopted. The cracking filling method refers to a method in which the expanded beads are filled into a mold in a state of being provided with a gap referred to as cracking, and the mold is completely closed, thereby mechanically compressing the expanded beads within the mold. In addition, the compression filling method refers to a method in which the expanded beads in a state of being compressed in advance with a pressurized gas or the like are filled into a mold.

As expanded beads to be filled into the mold, the expanded beads obtained by the above-described production method may be used as they are. In addition, for example, expanded beads imparted with an internal pressure by impregnating the expanded beads with a gas such as compressed air in a pressure-resistant container may also be used. In a case where an internal pressure is imparted to the expanded beads, the internal pressure of the expanded beads to be filled into the mold can be appropriately set within a range of, for example, 0.3 MPa (G) or less in terms of gauge pressure. The internal pressure of the expanded beads is preferably 0.20 MPa (G) or less. Alternatively, it is also possible to mold the expanded beads without imparting an internal pressure thereto. The pressure (internal pressure) inside the cell can be measured by, for example, the method described in Japanese Patent Application Laid-Open No. 2003-201361.

After the expanded beads have been filled into the mold, the expanded beads are heated by supplying steam into the mold. The expanded beads in the mold are heated by steam and fused together while being secondarily expanded. This makes it possible to integrate the expanded beads in the mold and to form a molded article.

After the expanded beads have been heated, the molded article in the mold is cooled to stabilize the shape. After that, the molded article is taken out from the mold, whereby the in-mold molding is completed. In the production method, an aging step in which the molded article, after being released from the mold, is left to stand in a high-temperature atmosphere for a predetermined time may be performed as necessary. The temperature of the atmosphere in the aging step can be appropriately set within a range of, for example, 60°C to 80°C. In addition, the time of leaving the molded article to stand in the aging step may be, for example, 12 hours or longer.

In addition, in the production method, shrinkage and deformation of the molded article can be inhibited even in a case where the aging step is not performed on the molded article released from the mold. In the case of omitting the aging step, the shape of the molded article can be stabilized by, for example, leaving the molded article released from the mold to stand in an environment at 23°C for 12 hours. In addition, in the case of shortening the time of the aging step, the shape of the molded article can be stabilized by, for example, leaving the molded article released from the mold to stand in a high-temperature atmosphere adjusted to a temperature of about 60°C to 80°C for three hours.

[Examples]

Examples of the expanded beads and the molded articles will be described.

(Polypropylene-based resin)

Table 1 shows the physical properties and the like of polypropylene-based resins used for the production of expanded beads. Polypropylene-based resins PP-A, PP-B, and PP-C used in the present example are all virgin ethylene-propylene random copolymers derived from fossil fuels.

[Table 1]

(Table 1)

|  | Unit | PP-A | PP-B | PP-C |
|---|---|---|---|---|
| Type | - | r-PP | r-PP | r-PP |
| Melt mass flow rate | g/10 min | 8.0 | 7.0 | 22.3 |
| Melting point | °C | 142 | 153 | 133 |
| Crystallization temperature | °C | 106 | 108 | 87 |

(continued)

|  | Unit | PP-A | PP-B | PP-C |
|---|---|---|---|---|
| Heat of fusion | J/g | 74 | 90 | 54 |
| Flexural modulus | MPa | 950 | 1350 | 700 |
| Ethylene component content | mass% | 3.1 | 1.4 | 4.5 |
| Butene component content | mass% | 0 | 0 | 0 |

[Melt mass flow rates of polypropylene-based resins]

The melt mass flow rates (that is, MFRs) of the polypropylene-based resins were measured under the conditions of a temperature of 230°C and a load of 2.16 kg in accordance with JIS K7210-1:2014.

[Melting Points of polypropylene-based resins]

The melting points of the polypropylene-based resins were obtained in accordance with JIS K7121-1987. Specifically, first, a test piece made of a polypropylene-based resin was conditioned in accordance with "(2) The case of measurement of melting temperature after a definite heat treatment" described in JIS K7121:1987. The heating rate and the cooling rate in conditioning were set to 10°C/min. The conditioned test piece was heated from 30°C to 200°C at a heating rate of 10°C/min to obtain a DSC curve. Then, the vertex temperature of a melting peak appearing in the DSC curve was defined as the melting point. The flow rate of a nitrogen gas under the measurement environment was set to 30 mL per minute. It is noted that a heat flux differential scanning calorimeter (manufactured by Seiko Instruments Inc., model number: DSC7020) was used as a measuring instrument. In a case where a plurality of melting peaks appeared in the DSC curve, the vertex temperature of the melting peak having the largest area was defined as the melting point of the polypropylene-based resin.

[Crystallization temperatures of polypropylene-based resins]

The crystallization temperatures of the polypropylene-based resins were measured in accordance with JIS K7121-1987. Specifically, a test piece made of a polypropylene-based resin was heated from 23°C to 200°C at a heating rate of 10°C/min using a heat flux differential scanning calorimeter (manufactured by Seiko Instruments Inc., model number: DSC7020) and then cooled from 200°C to 30°C at a cooling rate of 10°C/min to obtain a DSC curve. The vertex temperature of a crystallization peak in this DSC curve was defined as the crystallization temperature. The flow rate of a nitrogen gas under the measurement environment was set to 30 mL per minute. In a case where a plurality of crystallization peaks appeared in the DSC curve, the vertex temperature of the crystallization peak having the largest area was defined as the crystallization temperature of the polypropylene-based resin.

[Heat of fusion]

The heat of fusion of the polypropylene-based resin was obtained from a DSC curve obtained by performing differential scanning calorimetry in accordance with JIS K7122-1987. Specifically, first, a polypropylene-based resin was used as a test piece, and the test piece was conditioned in accordance with "(2) The case of measurement of melting temperature after a definite heat treatment" of "3. Conditioning of test piece" in JIS K7122:1987. The heating rate and the cooling rate in conditioning were set to 10°C/min. After that, the conditioned test piece was heated again from 23°C to 200°C at a rate of 10°C/min to acquire a DSC curve (a DSC curve at the time of second heating). The flow rate of a nitrogen gas under the measurement environment was set to 30 mL per minute.
On the DSC curve thus obtained, a straight line connecting a point corresponding to 80°C in the DSC curve and an end point on the high temperature side of the melting peak having the highest vertex temperature was drawn. In addition, the heat of fusion of the polypropylene-based resin was calculated based on the area of a region enclosed by the straight line thus determined and the melting peak of the DSC curve.

[Flexural modulus of polypropylene-based resin]

A polypropylene-based resin was heat-pressed at 230°C to prepare a 4 mm-thick sheet, and then the sheet was cut to prepare a test piece having a length of 80 mm, a width of 10 mm, and a thickness of 4 mm. The flexural modulus of this test piece was obtained in accordance with JIS K7171:2008. The radius R1 of an indenter and the radius R2 of a support base are both 5 mm, the inter-fulcrum distance is 64 mm, and the testing speed is 2 mm/min.

[Ethylene component contents and butene component contents of polypropylene-based resins]

The ethylene component contents and the butene component contents in the polypropylene-based resins were determined by a known method using an IR spectrum. Specifically, determination was performed by the method described in Polymer Analysis Handbook (edited by Research Committee of Polymer Analysis, The Japan Society for Analytical Chemistry, publication date: January 1995, publishing company: Kinokuniya Company Ltd., page numbers and item names: 615 to 616 "II. 2.3 2.3.4 Propylene/ethylene copolymer", 618 to 619 "II. 2.3 2.3.5 Propylene/butene copolymer"), that is, a method of performing quantification using the relationship between the absorbances of ethylene and butene corrected with a predetermined coefficient and the thickness of a film-shaped test piece and the like.

More specifically, first, the polypropylene-based resin was molded into a film shape by hot pressing in an environment at 180°C, and a plurality of test pieces having different thicknesses were prepared. Next, the absorbance ($A_{722}$ and $A_{733}$) at 722 cm$^{-1}$ and 733 cm$^{-1}$ derived from ethylene and the absorbance ($A_{766}$) at 766 cm$^{-1}$ derived from butene were read by measuring the IR spectrum of each test piece. Next, for each test piece, the ethylene component content (unit: mass%) in the polypropylene-based resin was calculated using the following formulas (2) to (4). A value obtained by arithmetically averaging the ethylene component contents obtained for each test piece was defined as the ethylene component content (unit: mass%) in the polypropylene-based resin.

$$(K'_{733})_c = 1/0.96\{(K'_{733})_a - 0.268(K'_{722})_a\} \ ... \ (2)$$

$$(K'_{722})_c = 1/0.96\{(K'_{722})_a - 0.150(K'_{733})_a\} \ ... \ (3)$$

$$\text{Ethylene component content} = 0.575\{(K'_{722})_c + (K'_{733})_c\} \ ... \ (4)$$

In formulas (2) to (4), $K'_a$ represents the apparent absorption coefficient ($K'_a = A/\rho t$) at each wavenumber, $K'_c$ represents the corrected absorption coefficient, A represents the absorbance, $\rho$ represents the density (unit: g/cm$^3$) of the resin, and t represents the thickness (unit: cm) of the film-like test piece. The formulas (2) to (4) can be applied to random copolymers.

In addition, for each test piece, the butene component content (unit: mass%) in the polypropylene-based resin was calculated using the following formula (5). A value obtained by arithmetically averaging the butene component contents obtained for each test piece was defined as the butene component content (unit: mass%) in the polypropylene-based resin.

$$\text{Butene component content} = 12.3(A_{766}/L) \ ... \ (5)$$

In the formula (5), A represents the absorbance, and L represents the thickness (unit: mm) of the film-like test piece.

Next, the configuration and production method of expanded beads used in the present example will be described.

(Expanded bead A)

The shape of expanded bead A is a tubular shape having a through-hole 111 as a defective portion 11 as shown in FIG. 5 and FIG. 6. In addition, the expanded bead A has a multilayer structure including a foamed layer 2 and a cover layer 3 in a non-foamed state that covers the foamed layer 2. As shown in Table 2, the polypropylene-based resin constituting the foamed layer 2 contains PP-A (refer to Table 1) as a polypropylene-based resin (A) and PP-B as a polypropylene-based resin (B) in a mass ratio of PP-A:PP-B = 60:40. The cover layer 3 is made of PP-C (refer to Table 1) as a thermoplastic resin.

In preparing expanded beads A, first, multilayer resin particles were prepared by a strand cutting method. In the preparation of the multilayer resin particles, a coextrusion apparatus including an extruder for forming a core layer, an extruder for forming a cover layer, and a coextrusion die connected to these two extruders was used. Specifically, PP-A, PP-B, carbon black, and zinc borate as a cell controlling agent were melt-kneaded in the extruder for forming a core layer to obtain a resin melt-kneaded product for forming a core layer. The blending amount of zinc borate was set to 500 mass ppm with respect to the total of the mass of PP-A and the mass of PP-B, and the blending amount of carbon black into the resin melt-kneaded product for forming a core layer was set to 2.6 mass% in the resin melt-kneaded product for forming a core layer. In addition, in parallel with this, PP-C and carbon black were melt-kneaded in the extruder for forming a cover layer to obtain a resin melt-kneaded product for forming a cover layer. The blending amount of carbon black into the resin melt-kneaded product for forming a cover layer was set to 2.6 mass% in the resin melt-kneaded product for forming a cover layer.

These resin melt-kneaded products were joined together in the coextrusion die to form a composite composed of a core layer in a non-foamed state and a cover layer in a non-foamed state that covers the side peripheral surface of the core layer. This composite was extruded from a small hole of the coextrusion die, an extrudate was then cooled in water having a water temperature adjusted to 10°C while being taken up, and cut to an appropriate length using a pelletizer, whereby multilayer resin particles were obtained. The multilayer resin particles included a core layer and a cover layer covering the side peripheral surface of the core layer, and had a through-hole formed in the core layer. The mass ratio between the core layer and the cover layer in the multilayer resin particles was set to core layer:cover layer = 95:5 (that is, the mass ratio of the cover layer was 5%). In addition, the mass per multilayer resin particle was set to about 1.5 mg.

Next, the multilayer resin particles were expanded (foamed) in two steps to prepare expanded beads. In a first expanding (foaming) step, the multilayer resin particles were foamed by a direct foaming method to obtain first-step expanded beads. Specifically, 1 kg of the multilayer resin particles were charged into a 5 L container together with 3 L of water as a dispersion medium. Next, 0.3 parts by mass of a dispersant and 0.004 parts by mass of a dispersion aid with respect to 100 parts by mass of the multilayer resin particles were added into the container, and the multilayer resin particles were dispersed in the dispersion medium. Kaolin was used as the dispersant. In addition, a surfactant (sodium alkylbenzene sulfonate) was used as the dispersion aid.

Next, in a state where the container was sealed, carbon dioxide as a physical blowing agent was supplied into the sealed container while the inside of the container was stirred, and the temperature in the container was raised to a foaming temperature shown in Table 2. The foaming pressure (that is, the pressure in the container) at this time was as shown in Table 2. After the temperature in the container reached the foaming temperature, this temperature was maintained for 15 minutes to impregnate the multilayer resin particles with the physical blowing agent. After the impregnation with the physical blowing agent was completed, the container was opened, and the contents were released to an environment under atmospheric pressure while the foaming pressure in the container was maintained, thereby foaming and expanding the multilayer resin particles. As a result, first-step expanded beads including a foamed layer obtained by foaming the core layer and a cover layer in a non-foamed state that covers the foamed layer were obtained.

Next, a second expanding step was performed, thereby further expanding the first-step expanded beads to obtain expanded beads A. In the second expanding step, first, the first-step expanded beads were charged into a pressure-resistant container (specifically, a metal drum), and air was supplied into the pressure-resistant container, thereby increasing the pressure in the container and impregnating cells with air. The internal pressure of the cells in the first-step expanded beads taken out from the pressure-resistant container was as shown in Table 2. After that, the first-step expanded beads were put into a metal drum, and steam was supplied so that the drum pressure reached a value shown in Table 2 to heat the first-step expanded beads, thereby obtaining expanded beads A.

(Expanded bead B)

Expanded bead B has substantially the same configuration as expanded bead A, except that the heat of fusion of the high-temperature peak and the like is different. A method for producing the expanded bead B is the same as the method for producing the expanded bead A, except that the conditions of the first foaming step and the second expanding step were changed as shown in Table 2.

(Expanded bead C)

Expanded bead C has substantially the same configuration as expanded bead B, except that the mass ratio between PP-A and PP-B is changed to the ratio shown in Table 2. A method for producing expanded bead C is the same as the method for producing the expanded bead B, except that the mass ratio between PP-A and PP-B and the foaming temperature in the first expanding step were changed as shown in Table 2.

(Expanded bead D)

Expanded bead D has a columnar shape having grooves 112 as defective portions 11 as shown in FIG. 8 and FIG. 9. In addition, expanded bead D has a multilayer structure including a foamed layer 2 and a cover layer 3 in a non-foamed state that covers the foamed layer 2. More specifically, expanded bead D has a columnar shape in which a cross-sectional shape (that is, the shape of a cut plane of the expanded bead) perpendicular to its axial direction, that is, a direction connecting a bottom surface 12 and a top surface 13, is cross-shaped. On a side peripheral surface 14 of expanded bead D, four grooves 112 are arranged at equal intervals. The side peripheral surface 14 of expanded bead D is covered with the cover layer 3, and the inside of the cover layer 3 is composed of the foamed layer 2. The groove 112 of expanded bead D has a V-like cross-sectional shape. The average depth H per groove of expanded bead D was 0.45 mm.

A method for producing expanded bead D is the same as the method for producing expanded beads A, except that resin particles having a cross-shaped cross section were prepared by changing the shape of the die, and the conditions of the first expanding step and the second expanding step were changed as shown in Table 3.

(Expanded bead E)

Expanded bead E has substantially the same configuration as expanded bead A, except that the polypropylene-based resin does not contain PP-B and is composed only of PP-A. A method for producing expanded bead E is the same as the method for producing expanded beads A, except that a resin melt-kneaded product for forming a core layer was prepared without blending PP-B, and the conditions of the first expanding step and the second expanding step were changed as shown in Table 3.

(Expanded bead F)

Expanded bead F has substantially the same configuration as expanded bead A, except that the mass ratio between PP-A and PP-B is changed to a ratio shown in Table 2. A method for producing expanded bead F is the same as the method for producing expanded bead A, except that the mass ratio between PP-A and PP-B, the conditions of the first expanding step, and the conditions of the second expanding step were changed as shown in Table 3.

(Expanded bead G)

Expanded bead G has substantially the same configuration as expanded bead A, except that the polypropylene-based resin does not contain PP-A and is composed only of PP-B. A method for producing expanded bead G is the same as the method for producing expanded bead A, except that a resin melt-kneaded product for forming a core layer was prepared without using PP-A, and the conditions of the first expanding step were changed as shown in Table 4.

(Expanded bead H)

Expanded bead H has substantially the same configuration as expanded bead A, except that the expanded bead has a columnar shape with no defective portions. A method for producing expanded bead H is the same as the method for producing expanded bead A, except that cylindrical resin particles having no through-holes were prepared by changing the shape of the die, and the conditions of the first expanding step and the second expanding step were changed as shown in Table 4.

(Expanded bead I)

Expanded bead I has substantially the same configuration as expanded bead A, except that the hole diameter of the through-hole is larger than that of expanded bead A. A method for producing the expanded bead I is the same as the method for producing expanded bead A, except that the average hole diameter of the through-holes in the resin particle was changed as shown in Table 4 by changing the shape of the die, and the conditions of the first expanding step were changed as shown in Table 4.

(Example 1-1)

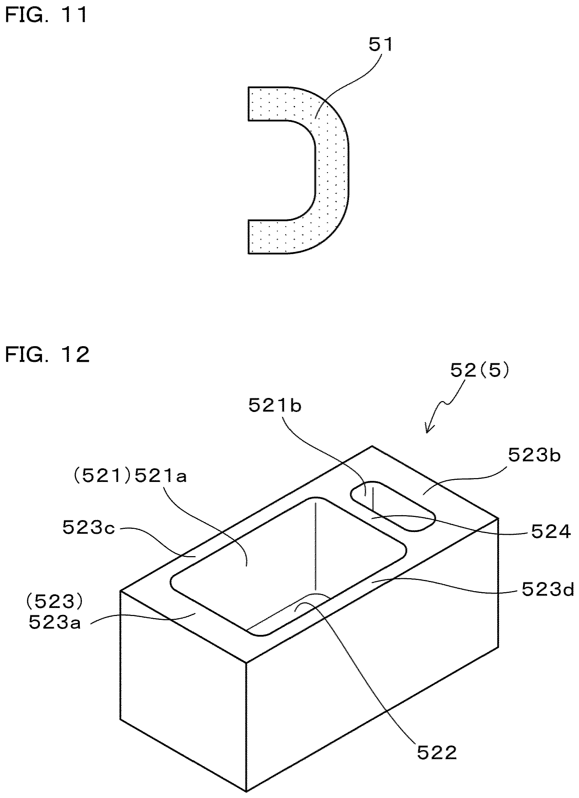

A molded article 5 of the present example is an automotive bumper core 51. As shown in FIG. 10, the bumper core 51 has a pillar-like shape. As shown in FIG. 11, the cross-sectional shape of the bumper core 51 in a cross section perpendicular to the longitudinal direction is a substantially C-like shape. In this example, the bumper core 51 has a length of about 1300 mm, a width (specifically, the outer dimension in the vertical direction in FIG. 11) of about 150 mm, a depth (specifically, the outer dimension in the lateral direction in FIG. 11) of 75 mm, and a wall thickness of about 30 mm. A method for producing the molded article 5 of the present example is as follows.
First, expanded beads A were charged into a pressure-resistant container and impregnated with compressed air in the pressure-resistant container, thereby imparting an internal pressure of 0.15 MPa (G) in terms of gauge pressure to the expanded beads. Next, expanded beads A were filled into a mold for molding a bumper core. As a method for filling into the mold, a cracking filling method was employed, and the cracking amount was set to 10%. After that, steam was supplied into the mold so that expanded beads A in the mold were secondarily expanded and fused together to form a molded article. The molding pressure at this time, that is, the pressure of the steam supplied into the mold was set to 0.32 MPa (G) in terms of gauge pressure. Next, the pressure in the mold was released, the molded article in the mold was cooled with water until the surface pressure applied on the inner surface of the mold due to the foaming force of the molded article reached 0.04 MPa (G), thereby releasing the molded article from the mold. The molded article released from the mold was left to stand in an atmosphere of 23°C. A molded article (specifically, a bumper core) of Example 1-1 was obtained as described above.

(Example 1-2)

A method for producing a molded article of Example 1-2 is the same as the method for producing a molded article of Example 1-1, except that a molded article released from the mold was aged by being left to stand in an atmosphere of 80°C for three hours.

(Example 1-3)

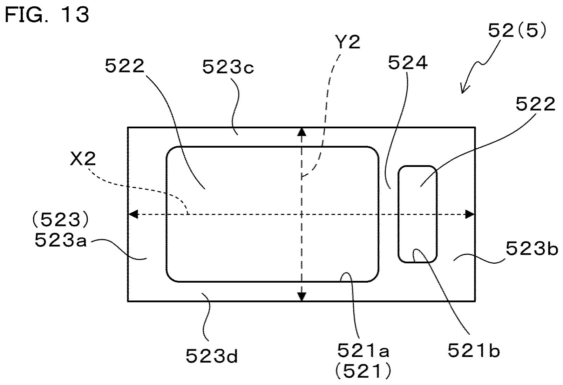

A molded article 5 of Example 1-3 is an automotive tool box 52. As shown in FIG. 12 and FIG. 13, the tool box 52 has a cuboid shape, and two recessed portions 521 (521a and 521b) for accommodating a tool are provided. More specifically, the tool box 52 includes a bottom plate portion 522, four side wall portions 523 (523a to 523d) erected on an outer peripheral edge of the bottom plate portion 522, and a partition wall portion 524 that partitions a space surrounded by these side wall portions 523 into the first recessed portion 521a and the second recessed portion 521b. The partition wall portion 524 extends in a direction parallel to the width direction of the tool box 52.

The tool box 52 of the present example has a length of about 900 mm, a width of about 450 mm, and a height of about 400 mm. The first recessed portion 521a has an inner dimension of about 550 mm in length, about 350 mm in width, and about 300 mm in depth. The second recessed portion 521b has an inner dimension of about 100 mm in length, about 250 mm in width, and about 100 mm in depth. Out of the four side wall portions 523, the first side wall portion 523a and the second side wall portion 523b provided at both ends in the length direction of the tool box 52 each have a thickness of about 100 mm. In the third side wall portion 523c and the fourth side wall portion 523d, provided at both ends in the width direction of the tool box 52, the thicknesses of portions facing the first recessed portion 521a are each about 50 mm, and the thicknesses of portions facing the second recessed portion 521b are each about 100 mm. In addition, the partition wall portion 524 has a thickness of about 50 mm. A method for producing the molded article 5 of the present example is as follows.

First, expanded beads A were put into a pressure-resistant container and impregnated with compressed air in the pressure-resistant container, thereby imparting an internal pressure of 0.15 MPa (G) in terms of gauge pressure to the expanded beads. Next, expanded beads A were filled into a mold for molding a tool box. As a method for filling into the mold, a cracking filling method was employed, and the cracking amount was set to 10%. After that, steam was supplied into the mold so that expanded beads A in the mold were secondarily expanded and fused together to form a molded article. The molding pressure at this time, that is, the pressure of the steam supplied into the mold was set to 0.34 MPa (G) in terms of gauge pressure. Next, the pressure in the mold was released, the molded article in the mold was cooled with water until the surface pressure applied on the inner surface of the mold due to the foaming force of the molded article reached 0.04 MPa (G), thereby releasing the molded article from the mold. In addition, the molded article released from the mold was left to stand in an atmosphere of 23°C. A molded article (specifically, a tool box) of Example 1-3 was obtained as described above.

(Example 1-4)

A method for producing a molded article of Example 1-4 is the same as the method for producing a molded article of Example 1-3, except that a molded article released from the mold was aged by being left to stand in an atmosphere of 80°C for three hours.

(Examples 2-1, 3-1, and 4-1 and Comparative Examples 1-1, 2-1, 3-1, 4-1, and 5-1)

Molded articles of these Examples and Comparative Examples are automotive bumper cores having the same shape as the molded article of Example 1-1 and are composed of expanded beads shown in Tables 6 to 13. A method for producing molded articles of these Examples and Comparative Examples is generally the same as the method for producing the molded article of Example 1-1, except that expanded beads shown in Tables 6 to 13 were used instead of expanded beads A and the molding pressure was changed as shown in Tables 6 to 13.

(Examples 2-2, 3-2, and 4-2 and Comparative Examples 1-2, 2-2, 3-2, 4-2, and 5-2)

Molded articles of these Examples and Comparative Examples are automotive bumper cores having the same shape as the molded article of Example 1-2 and are composed of expanded beads shown in Tables 6 to 13. A method for producing molded articles of these Examples and Comparative Examples is generally the same as the method for producing the molded article of Example 1-2, except that expanded beads shown in Tables 6 to 13 were used instead of expanded beads A and the molding pressure was changed as shown in Tables 6 to 13.

(Examples 2-3, 3-3, and 4-3 and Comparative Examples 1-3, 2-3, 3-3, 4-3, and 5-3)

Molded articles of these Examples and Comparative Examples are automotive tool boxes having the same shape as the molded article of Example 1-3 and are composed of expanded beads shown in Tables 6 to 13. A method for producing molded articles of these Examples and Comparative Examples is generally the same as the method for producing the molded article of Example 1-3, except that expanded beads shown in Tables 6 to 13 were used instead of expanded beads A and the molding pressure was changed as shown in Tables 6 to 13.

(Examples 2-4, 3-4, and 4-4 and Comparative Examples 1-4, 2-4, 3-4, 4-4, and 5-4)

Molded articles of these Examples and Comparative Examples are automotive tool boxes having the same shape as the molded article of Example 1-4 and are composed of expanded beads shown in Tables 6 to 13. A method for producing molded articles of these Examples and Comparative Examples is generally the same as the method for producing the molded article of Example 1-4, except that expanded beads shown in Tables 6 to 13 were used instead of expanded beads A and the molding pressure was changed as shown in Tables 6 to 13.

Tables 2 to 4 show various physical properties of the expanded beads A to I. Tables 5 to 13 show various physical properties of the molded articles of Examples and Comparative Examples. Methods for measuring and evaluating the various physical properties shown in Tables 2 to 13 are as follows.

(Bulk Density)

First, the expanded beads were left to stand under an environment of a relative humidity of 50%, a temperature of 23°C, and an atmospheric pressure of 1 atm for 24 hours or longer to condition the expanded bead. The conditioned expanded beads were filled into a measuring cylinder so as to be naturally deposited, and the bulk volume (unit: L) of the expanded beads was read from the scale of the measuring cylinder. After that, the mass (unit: g) of the expanded beads in the measuring cylinder was divided by the above-described bulk volume, and the unit was converted, whereby the bulk density (unit: $kg/m^3$) of the expanded beads was calculated.

(Apparent Density)

First, the expanded beads were left to stand under an environment of a relative humidity of 50%, a temperature of 23°C, and an atmospheric pressure of 1 atm for 24 hours or longer to condition the expanded beads. After the mass of the conditioned expanded beads was measured, the expanded beads were then immersed in ethanol at a temperature of 23°C contained in a measuring cylinder using a wire mesh. Then, taking into account the volume of the wire mesh, the volume of the expanded beads was measured from the increase in the liquid level. The measured mass (unit: g) of the expanded beads was divided by the volume (unit: L), and the unit was then converted, whereby the apparent density (unit: $kg/m^3$) of the expanded beads was calculated.

(Average hole diameter d of through-holes)

First, the expanded beads were left to stand under an environment of a relative humidity of 50%, a temperature of 23°C, and an atmospheric pressure of 1 atm for 24 hours or longer to condition the expanded beads. 100 expanded beads randomly selected from the conditioned expanded beads were cut in a plane perpendicular to the axial direction at the center in the axial direction, thereby exposing the cut plane. A photograph of the cut plane of each expanded bead was taken, and the cross-sectional area (opening area) of the through-hole portions in the cross-sectional photograph was obtained. The diameters of virtual perfect circles having the same area as the cross-sectional area were calculated, and a value obtained by arithmetically averaging the diameters was defined as the average hole diameter d (unit: mm) of the through-holes of the expanded beads.

(Average outer diameter D of expanded beads)

First, the expanded beads were left to stand under an environment of a relative humidity of 50%, a temperature of 23°C, and an atmospheric pressure of 1 atm for 24 hours or longer to condition the expanded beads. 100 expanded beads randomly selected from the conditioned expanded beads were cut in a plane perpendicular to the axial direction at the center in the axial direction, thereby exposing the cut plane shown in FIG. 6 and FIG. 9. In this cut plane, two points Q3 and Q4 on the outline of the expanded bead 1 at which the distance between the two points became the longest were determined, and the distance (that is, the maximum outer diameter of the expanded bead in the cut plane) between these two points was defined as the outer diameter r of each expanded bead 1. In addition, the arithmetic average value of the outer diameters r measured regarding 100 expanded beads 1 was defined as the average outer diameter D of the expanded beads. The outer diameter of the expanded bead 1 in the cut plane was measured by taking a photograph of the cut plane of the expanded bead and analyzing the image.

(Average cross-sectional area A of expanded beads)

First, the expanded beads were left to stand under an environment of a relative humidity of 50%, a temperature of 23°C, and an atmospheric pressure of 1 atm for 24 hours or longer to condition the expanded beads. The conditioned expanded beads were cut in a plane perpendicular to the axial direction at the center in the axial direction thereof, and the cut plane was exposed. The cross-sectional area of each expanded bead in the cut plane was measured. Specifically, the cross-sectional area of an expanded bead having a multilayer structure is the sum of the cross-sectional area of the foamed layer and the cross-sectional area of the cover layer in the cut plane, and the cross-sectional area of a defective portion is not included in the cross-sectional area of the expanded bead. The cross-sectional area of the expanded bead in the cut plane was measured by taking a photograph of the cut plane of the expanded bead and analyzing the image. The above operation was performed on 100 expanded beads, and the arithmetic average value of the obtained cross-sectional areas of the expanded beads was defined as the average cross-sectional area A of the expanded bead.

(Average cross-sectional area Ca per defective portion and total cross-sectional area Ct of defective portions)

First, the expanded beads were left to stand under an environment of a relative humidity of 50%, a temperature of 23°C, and an atmospheric pressure of 1 atm for 24 hours or longer to condition the expanded beads. 100 expanded beads were randomly selected from the conditioned expanded beads, and these expanded beads were cut in a plane perpendicular to the axial direction at the central position in the axial direction to expose the cut planes. Next, a photograph of the cut plane of each expanded bead was taken, and the image was analyzed, thereby measuring the cross-sectional area of the defective portions of each expanded bead.

Next, the cross-sectional areas of the defective portions thus obtained were added, thereby calculating the total of the cross-sectional areas of the defective portions in each expanded bead. In addition, the total of the cross-sectional areas of the defective portions was divided by the number of the defective portions, thereby calculating the cross-sectional area per defective portion in each expanded bead.

The above operation is performed on 100 expanded beads, and the arithmetic average value of the totals of the cross-sectional areas of the defective portions obtained regarding the 100 expanded beads was defined as the total cross-sectional area Ct of the defective portions. In addition, the average value of the cross-sectional areas per defective portion obtained regarding the 100 expanded beads was defined as the average cross-sectional area Ca per defective portion. Tables 2 to 4 show the ratios Ct/A of the total cross-sectional area Ct of the defective portions to the average cross-sectional area A of the expanded bead in the cut plane and the ratios Ca/A of the average cross-sectional area Ca per defective portion to the average cross-sectional area A of the expanded bead.

(Closed cell content of expanded bead)

The closed cell content of the expanded beads was measured using an air comparison pycnometer in accordance with ASTM D2856-70 Procedure C. Specifically, first, the expanded beads were left to stand under an environment of a relative humidity of 50%, a temperature of 23°C, and an atmospheric pressure of 1 atm for 24 hours or longer to condition the expanded beads. The conditioned expanded beads having a bulk volume of about 20 cm$^3$ were used as a measurement sample. The measurement sample was immersed in ethanol contained in a measuring cylinder. The apparent volume Va of the measurement sample was measured from the amount of the liquid level increased at this time. The measurement sample after measuring the apparent volume Va was sufficiently dried, and then the value Vx of the true volume of the measurement sample was measured using an air comparison pycnometer ("Beckman Model1000 Air Comparison Pycnometer" manufactured by Tokyo-Science Co., Ltd.) in accordance with the procedure C described in ASTM-D2856-70. Thereafter, the closed cell content (unit: %) of the measurement sample was calculated based on the following formula (6) using these volume values Va and Vx. The above operation was performed five times on different measurement samples, and the arithmetic average value (N = 5) of the closed cell contents in the five measurement samples was defined as the closed cell content (unit: %) of the expanded beads.

$$\text{Closed cell content} = (Vx - W/\rho) \times 100/(Va - W/\rho) \ldots (6)$$

The meanings of the symbols in the formula (6) are as follows.

Vx: The true volume of the measurement sample measured by the above-described method, that is, the sum of the volume of the resin constituting the expanded beads and the total cell volume of the closed cell portion in the expanded beads (unit: $cm^3$).

Va: The apparent volume (unit: $cm^3$) of the measurement sample measured from the amount of the liquid level increased when the measurement sample is immersed in ethanol contained in a measuring cylinder

W: The mass of the measurement sample (unit: g)

$\rho$: The density of the resin constituting the expanded beads (unit: $g/cm^3$)

(Heat of fusion of high-temperature peak, heat of fusion of resin intrinsic peak, and total heat of fusion)

The vertex temperature and heat of fusion of the high-temperature peak were determined from a DSC curve obtained by performing differential scanning calorimetry (DSC) in accordance with JIS K7122:1987. Specifically, first, about 3 mg of the expanded beads were used as a sample, and the sample was heated from 23°C to 200°C at a heating rate of 10°C/min to perform differential scanning calorimetry, thereby obtaining a DSC curve. Next, as exemplarily shown in FIG. 7, a straight line L2 connecting a point $\alpha$ corresponding to 80°C on the DSC curve and a point $\beta$ corresponding to the melting end temperature T of the expanded beads was drawn. Furthermore, a straight line L3 that passed through the maximum point $\gamma$ present between the resin intrinsic peak $\Delta H1$ and the high-temperature peak $\Delta H2$ and was parallel to the vertical axis of the graph was drawn, and the resin intrinsic peak $\Delta H1$ and the high-temperature peak $\Delta H2$ were divided by the straight line L3.

The heat of fusion of the high-temperature peak $\Delta H2$ was then calculated based on the area of a portion enclosed by a portion constituting the high-temperature peak $\Delta H2$ in the DSC curve, the straight line L2, and the straight line L3. Similarly, the heat of fusion of the resin intrinsic peak $\Delta H1$ was calculated based on the area of a portion enclosed by a portion constituting the resin intrinsic peak $\Delta H1$ in the DSC curve, the straight line L2, and the straight line L3. In addition, the total heat of fusion was calculated based on the area of a portion enclosed by a portion constituting the resin intrinsic peak $\Delta H1$ in the DSC curve, a portion constituting the high-temperature peak $\Delta H2$ in the DSC curve, and the straight line L2.

The above operation was performed five times using different samples, and the arithmetic average value of the heat of fusion of the high-temperature peak $\Delta H2$ obtained in each time of measurement was defined as the heat of fusion $Q_{H2}$ of the high-temperature peak $\Delta H2$ of the expanded bead. Similarly, the arithmetic average value of the heat of fusion of the resin intrinsic peak $\Delta H1$ obtained in each time of measurement was defined as the heat of fusion $Q_{H1}$ of the resin intrinsic peak $\Delta H1$ of the expanded bead. In addition, the arithmetic average value of all of the heat of fusion obtained in each measurement was defined as the total heat of fusion $Q_{H1} + Q_{H2}$ of the expanded bead.

(Moldable range and lower limit of molding pressure)

In the evaluation of the moldable range and the lower limit of molding pressure, a flat plate-like molded article was prepared by performing in-mold molding while the molding pressure during main heating was changed from 0.24 MPa (G) to 0.44 MPa (G) at 0.02 MPa increments, and the moldable range was determined based on the surface properties, fusion bondability, and recoverability of the obtained molded article.

A method for producing the molded article used for the evaluation of the moldable range is as follows. First, the expanded beads were put into a pressure-resistant container, the expanded beads were then impregnated with air by pressurizing the inside of the pressure-resistant container with the air to impart an internal pressure of 0.12 MPa (G) to the expanded beads. Next, the expanded beads imparted with the internal pressure were filled into a mold by a cracking filling method. In the present example, a mold having a molding cavity capable of molding a flat plate-like molded article having a length of 300 mm, a width of 250 mm, and a thickness of 60 mm was used. In the cracking filling, the expanded beads were filled into the mold with a cracking gap of 6 mm (that is, a cracking amount of 10%) open in the thickness direction of the molded article, and the mold was then completely closed, thereby mechanically compressing the expanded beads in the mold.

Next, steam was supplied into the mold to perform in-mold molding. In the in-mold molding, first, steam was supplied into the mold for five seconds in a state where a drain valve of the mold was opened to perform preheating. Next, the drain valve was closed, steam was supplied from one surface of the mold to the molding cavity until a pressure 0.08 MPa (G) lower than the molding pressure during the main heating was reached to perform first one-side heating. Next, steam was supplied from the other surface of the mold to the molding cavity until a pressure 0.04 MPa (G) lower than the molding pressure during the main heating was reached to perform second one-side heating. After that, steam was supplied from both surfaces of the mold to the molding cavity until the molding pressure during the main heating was reached to perform the main heating. After the main heating was completed, the pressure in the mold was released, and the molded article was cooled in the mold until the surface pressure due to the foaming force of the molded article reached 0.04 MPa (G).

After that, an aging step was performed by leaving the molded article taken out from the mold to stand in an oven at 80°C for 12 hours. After the aging step, the molded article was conditioned by being left to stand for 24 hours under conditions of a relative humidity of 50%, 23°C, and 1 atm. The surface properties, fusion bondability, and recoverability of the conditioned molded article were evaluated, and a range of the molding pressure (that is, a molding pressure at which an acceptable product can be obtained) at which the molded article passed all of the items according to the evaluation criteria described below was defined as the moldable range and recorded in the "molding pressure " column of Tables 2 to 4. In addition, the numbers of conditions under which an acceptable product were obtained was recorded in the "number of conditions" column of Tables 2 to 4. The wider the moldable range, the superior the moldability can be determined to be.

In addition, the lowest molding pressure in the moldable range determined by the above method is recorded in Tables 2 to 4 as the lower limit of molding pressure. As the moldable molding pressure becomes lower, in-mold molding becomes possible with a smaller amount of steam, and the productivity is considered to be excellent.

Methods for evaluating the surface properties, the fusion bondability, and the recoverability in the evaluation of the moldable range and the lower limit of molding pressure are as follows.

[Surface Properties]

A 100 mm × 100 mm square was drawn at the central portion of one skin surface in the thickness direction of the molded article, and a diagonal line was then drawn from any one corner of this square. After that, the number of voids, that is, gaps formed between the expanded beads, having a size of 1 mm × 1 mm or more among voids present on the diagonal line was counted. In a case where the number of the voids was two or less, the surface properties were determined as pass, and in a case where the number was three or more, the surface properties were determined as fail.

[Fusion bondability]

The molded article was broken so as to be substantially equally divided in the longitudinal direction. 100 or more expanded beads randomly selected from expanded beads exposed on the broken surface were visually observed, and whether the expanded beads were broken inside the beads (that is, material-broken expanded beads) or broken at the interfaces between the expanded beads was determined. Then, a value (that is, the material breakage rate) expressing the ratio of the number of expanded beads broken inside the particles to the total number of the observed expanded beads in percentage was calculated, and this value was defined as the fusion-bonding rate. In a case where the fusion-bonding rate was 80% or more was determined as pass, and a case where the fusion-bonding rate was less than 80% was determined as fail.

[Recoverability]

In a plan view of the molded article viewed in the thickness direction, the thicknesses of the molded article at four positions 10 mm inward from each corner in the center direction and the thickness of the molded article at the central portion were measured. Next, the ratio (unit: %) of the thickness at the thinnest portion to the thickness at the thickest portion among the measured portions was calculated. A case where the thickness ratio thus obtained was 95% or more was determined as pass, and a case where the ratio was less than 95% was determined as fail.

(Water cooling time)

In the in-mold molding of each of the molded articles in Examples and Comparative Examples, the time taken from the time point at which the supply of steam to the mold was completed to the time point at which the surface pressure due to the foaming force of the molded article reached 0.04 MPa (G) was recorded in Tables 5 to 13 as the water cooling time.

(Density of molded article)

The density (unit: $kg/m^3$) of each molded article in Examples and Comparative Examples was calculated by dividing the mass (unit: g) of the molded article by the volume (unit: L) of the molded article obtained by the submersion method and then converting the unit.

(Appearance)

The appearance was evaluated based on the results of visually observing each molded article in Examples and Comparative Examples. The meanings of the symbols recorded in the "appearance" column in Tables 5 to 13 are as follows.

A: There are no gaps (voids) between the expanded beads on the surface of the molded article, and the molded article has a beautiful surface from which unevenness derived from a defective portion is not shown.
B: There are a small number of gaps (voids) between the expanded beads on the surface of the molded article, and/or the molded article has a surface from which unevenness derived from a defective portion is slightly shown.
C: There are a large number of gaps (voids) between the expanded beads on the surface of the molded article, and/or the molded article has a surface from which unevenness derived from a defective portion is shown.

(Dimensional stability)

The dimensional stability was evaluated by the following method according to the shape of the molded article and the aging conditions.

[Examples 1-1, 2-1, 3-1, and 4-1 and Comparative Examples 1-1, 2-1, 3-1, 4-1, and 5-1]

In the evaluation of the dimensional stability of these molded articles of Examples and Comparative Examples, the molded article released from the mold was left to stand in an atmosphere of 23°C, and the dimension of a predetermined portion of the molded article was measured at each of the following time points: a time point after six hours from the release from the mold; and a time point after five days from the release from the mold. In addition, as a reference specimen, a molded article molded under the same conditions as in each of Examples and Comparative Examples and aged by being left to stand in an atmosphere of 80°C for 12 hours from the release from the mold was prepared. The dimension of a predetermined portion of this reference specimen was then measured. Based on these dimensions, the value of an index $\alpha1$ and the value of an index $\beta1$, which will be described below, were calculated, and the dimensional stability was evaluated.
For these molded articles of Examples and Comparative Examples, the meanings of the symbols recorded in the "dimensional stability" column in Tables 5 to 13 are as follows.

A: $\alpha1$ is 1% or less, and $\beta1$ is 13 mm or less.
B: The dimensional stability belongs to neither A nor C.
C: $\alpha1$ is larger than 1%, and $\beta1$ is larger than 13 mm.
Not evaluated: No evaluation was made since the appearance is evaluated as fail.

The dimension of the predetermined portion of the molded article described above is an outer dimension X1 (unit: mm) of the bumper core 51 in the longitudinal direction, that is, the distance from one end to the other end of the bumper core 51 in the longitudinal direction.
The index $\alpha1$ (unit: %) is calculated based on the following formula (7) using an outer dimension $X1_{\text{no aging, 6 h}}$ of the bumper core 51 in the longitudinal direction at the time point after six hours from the release from the mold, and an outer dimension $X1_{\text{no aging, 5 d}}$ of the bumper core 51 in the longitudinal direction at the time point after five days from the release from the mold. It means that the smaller the value of the index $\alpha1$, the smaller the dimensional change from the time of release from the mold to the time when the shape is stabilized.

$$\alpha1 = ([(X1_{\text{no aging, 5 d}} - X1_{\text{no aging, 6 h}})]/X1_{\text{no aging, 6 h}}) \times 100 \ldots (7)$$

The index $\beta1$ (unit: %) is calculated based on the following formula (8) using an outer dimension $X1_{\text{no aging, 6 h}}$ of the bumper core 51 in the longitudinal direction at the time point after six hours from the release from the mold, and an outer dimension $X1_{\text{ref}}$ of the above-described reference specimen in the longitudinal direction. It means that the smaller the value of the index $\beta1$, the easier it is to obtain a molded article having a desired dimension even when the molded article is left to stand for a short period of time after molding.

$$\beta1 = |X1_{\text{ref}} - X1_{\text{no aging, 6 h}}| \ldots (8)$$

[Examples 1-2, 2-2, 3-2, and 4-2 and Comparative Examples 1-2, 2-2, 3-2, 4-2, and 5-2]

In the evaluation of the dimensional stability of these molded articles of Examples and Comparative Examples, the molded article released from the mold was aged by being left to stand in an atmosphere of 80°C for three hours, and the molded article was then moved to an atmosphere of 23°C and further left to stand. Then, the dimension of a predetermined portion of the molded article was measured at each of the following time points: a time point after six hours from the release from the mold; and a time point after five days from the release from the mold. In addition, as a reference specimen, a molded article molded under the same conditions as in each of Examples and Comparative Examples and aged by being left to stand in an atmosphere of 80°C for 12 hours from the release from the mold was prepared. The dimension of a predetermined portion of this reference specimen was measured. Based on these dimensions, the value of an index $\alpha2$ and the value of an index $\beta2$, which will be described below, were calculated, and the dimensional stability was evaluated.

For these molded articles of Examples and Comparative Examples, the meanings of the symbols recorded in the "dimensional stability" column in Tables 5 to 13 are as follows.

A: $\alpha2$ is 1% or less, and $\beta2$ is 13 mm or less.
B: The dimensional stability belongs to neither A nor C.
C: $\alpha2$ is larger than 1%, and $\beta2$ is larger than 13 mm.
Not evaluated: No evaluation was made since the appearance is evaluated as fail.

The dimension of the predetermined portion of the molded article described above is specifically the outer dimension X1 (unit: mm) of the bumper core 51 shown in FIG. 10 in the longitudinal direction.

The index $\alpha2$ (unit: %) is calculated based on the following formula (9) using an outer dimension $X1_{3\,h\,aging,\,6\,h}$ of the bumper core 51 in the longitudinal direction at the time point after six hours from the release from the mold and an outer dimension $X1_{3\,h\,aging,\,5\,d}$ of the bumper core 51 in the longitudinal direction at the time point after five days from the release from the mold. It means that the smaller the value of the index $\alpha2$, the smaller the dimensional change from the time of release from the mold to the time when the shape is stabilized.

$$\alpha2 = ([(X1_{3\,h\,aging,\,5\,d} - X1_{3\,h\,aging,\,6\,h})]/X1_{3\,h\,aging,\,6\,h}) \times 100 \dots (9)$$

The index $\beta2$ (unit: mm) is calculated based on the following formula (10) using an outer dimension $X1_{3\,h\,aging,\,6\,h}$ of the bumper core 51 in the longitudinal direction at the time point after six hours from the release from the mold and an outer dimension $X1_{ref}$ of the above-described reference specimen in the longitudinal direction. It means that the smaller the value of the index $\beta2$, the easier it is to obtain a molded article having a desired dimension even when the molded article is left to stand for a short period of time after molding.

$$\beta2 = |X1_{ref} - X1_{3\,h\,aging,\,6\,h}| \dots (10)$$

[Examples 1-3, 2-3, 3-3, and 4-3 and Comparative Examples 1-3, 2-3, 3-3, 4-3, and 5-3]

In the evaluation of the dimensional stability of these molded articles of Examples and Comparative Examples, the molded article released from the mold was left to stand in an atmosphere of 23°C, and the dimension of a predetermined portion of the molded article was measured at each of the following time points: a time point after six hours from the release from the mold; and a time point after five days from the release from the mold. In addition, as a reference specimen, a molded article molded under the same conditions as in each of Examples and Comparative Examples and aged by being left to stand in an atmosphere of 80°C for 12 hours from the release from the mold was prepared. The dimension of a predetermined portion of this reference specimen was measured. Based on these dimensions, the values of indexes $\alpha3$, $\alpha4$, $\beta3$, and $\beta4$, which will be described below, were calculated, and the dimensional stability was evaluated.

For these molded articles of Examples and Comparative Examples, the meanings of the symbols recorded in the "dimensional stability" column in Tables 5 to 13 are as follows.

A: All four conditions of $\alpha3$ being 1% or less, $\alpha4$ being 1% or less, $\beta3$ being 9 mm or less, and $\beta4$ being 5 mm or less are satisfied.
B: The dimensional stability belongs to neither A nor C.
C: All four conditions of $\alpha3$ being larger than 1%, $\alpha4$ being larger than 1%, $\beta3$ being larger than 9 mm, and $\beta4$ being larger than 5 mm are satisfied.
Not evaluated: No evaluation was made since the appearance is evaluated as fail.

The dimension of the predetermined portion of the molded article described above is specifically an outer dimension X2 (unit: mm) in the longitudinal direction and an outer dimension Y2 (unit: mm) in the width direction of the tool box 52 on its upper surface (that is, the surface on which the recessed portion 521 is open) as shown in FIG. 13. The outer dimension X2 of the tool box 52 in the longitudinal direction is specifically an outer dimension from the upper end of the first side wall portion 523a to the upper end of the second side wall portion 523b, measured at the center of the tool box 52 in the width direction. In addition, the outer dimension Y2 of the tool box 52 in the width direction is specifically an outer dimension from the upper end of the third side wall portion 523c to the upper end of the fourth side wall portion 523d, measured at the center of the tool box 52 in the longitudinal direction.

The index $\alpha3$ (unit: %) is calculated based on the following formula (11) using an outer dimension $X2_{\text{no aging, 6 h}}$ of the tool box 52 in the longitudinal direction at the time point after six hours from the release from the mold and an outer dimension $X2_{\text{no aging, 5 d}}$ of the tool box 52 in the longitudinal direction at the time point after five days from the release from the mold. It means that the smaller the value of the index $\alpha3$, the smaller the dimensional change in the longitudinal direction from the time of release from the mold to the time when the shape is stabilized.

$$\alpha3 = ([(X2_{\text{no aging, 5 d}} - X2_{\text{no aging, 6 h}})]/X2_{\text{no aging, 6 h}}) \times 100 \ ... \ (11)$$

The index $\alpha4$ (unit: %) is calculated based on the following formula (12) using an outer dimension $Y2_{\text{no aging, 6 h}}$ of the tool box 52 in the width direction at the time point after six hours from the release from the mold and an outer dimension $Y2_{\text{no aging, 5 d}}$ of the tool box 52 in the width direction at the time point after five days from the release from the mold. It means that the smaller the value of the index $\alpha4$, the smaller the dimensional change in the width direction from the time of release from the mold to the time when the shape is stabilized.

$$\alpha4 = ([(Y2_{\text{no aging, 5 d}} - Y2_{\text{no aging, 6 h}})]/Y2_{\text{no aging, 6 h}}) \times 100 \ ... \ (12)$$

The index $\beta3$ (unit: %) is calculated based on the following formula (13) using an outer dimension $X2_{\text{no aging, 6 h}}$ of the tool box 52 in the longitudinal direction at the time point after six hours from the release from the mold and an outer dimension $X2_{\text{ref}}$ of the above-described reference specimen in the longitudinal direction. It means that the smaller the value of the index $\beta3$, the easier it is to obtain a molded article having a desired dimension in the longitudinal direction even when the molded article is left to stand for a short period of time after molding.

$$\beta3 = |X2_{\text{ref}} - X2_{\text{no aging, 6 h}}| \ ... \ (13)$$

The index $\beta4$ (unit: %) is calculated based on the following formula (14) using an outer dimension $Y2_{\text{no aging, 6 h}}$ of the tool box 52 in the width direction at the time point after six hours from the release from the mold and an outer dimension $Y2_{\text{ref}}$ of the above-described reference specimen in the width direction. It means that the smaller the value of the index $\beta4$, the easier it is to obtain a molded article having a desired dimension in the width direction even when the molded article is left to stand for a short period of time after molding.

$$\beta4 = |Y2_{\text{ref}} - Y2_{\text{no aging, 6 h}}| \ ... \ (14)$$

[Examples 1-4, 2-4, 3-4, and 4-4 and Comparative Examples 1-4, 2-4, 3-4, 4-4, and 5-4]

In the evaluation of the dimensional stability of these molded articles of Examples and Comparative Examples, the molded article released from the mold was aged by being left to stand in an atmosphere of 80°C for three hours, and the molded article was then moved to an atmosphere of 23°C and further left to stand. Then, the dimension of a predetermined portion of the molded article was measured at each of the following time points: a time point after six hours from the release from the mold; and a time point after five days from the release from the mold. In addition, as a reference specimen, a molded article molded under the same conditions as in each of Examples and Comparative Examples and aged by being left to stand in an atmosphere of 80°C for 12 hours from the release from the mold was prepared. The dimension of a predetermined portion of this reference specimen was measured. Based on these dimensions, the values of indexes $\alpha5$, $\alpha6$, $\beta5$, and $\beta6$, which will be described below, were calculated, and the dimensional stability was evaluated.

For these molded articles of Examples and Comparative Examples, the meanings of the symbols recorded in the "dimensional stability" column in Tables 5 to 13 are as follows.

A: All four conditions of $\alpha5$ being 1% or less, $\alpha6$ being 1% or less, $\beta5$ being 9 mm or less, and $\beta6$ being 5 mm or less are satisfied.

B: The dimensional stability belongs to neither A nor C.

C: All four conditions of $\alpha 5$ being larger than 1%, $\alpha 6$ being larger than 1%, $\beta 5$ being larger than 9 mm, and $\beta 6$ being larger than 5 mm are satisfied.

Not evaluated: No evaluation was made since the appearance is evaluated as fail.

The dimension of the predetermined portion of the molded article described above is the outer dimension X2 (unit: mm) in the longitudinal direction and the outer dimension Y2 (unit: mm) in the width direction of the tool box 52 on the upper surface of the tool box 52 shown in FIG. 13.

The index $\alpha 5$ (unit: %) is calculated based on the following formula (15) using an outer dimension $X2_{3\,h\,aging,\,6\,h}$ of the tool box 52 in the longitudinal direction at the time point after six hours from the release from the mold and an outer dimension $X2_{3\,h\,aging,\,5\,d}$ of the tool box 52 in the longitudinal direction at the time point after five days from the release from the mold. It means that the smaller the value of the index $\alpha 5$, the smaller the dimensional change in the longitudinal direction from the time of release from the mold to the time when the shape is stabilized.

$$\alpha 5 = ([(X2_{3\,h\,aging,\,5\,d} - X2_{3\,h\,aging,\,6\,h})]/X2_{3\,h\,aging,\,6\,h}) \times 100 \ ... \ (15)$$

The index $\alpha 6$ (unit: %) is calculated based on the following formula (16) using an outer dimension $Y2_{3\,h\,aging,\,6\,h}$ of the tool box 52 in the width direction at the time point after six hours from the release from the mold and an outer dimension $Y2_{3\,h\,aging,\,5\,d}$ of the tool box 52 in the longitudinal direction at the time point after five days from the release from the mold. It means that the smaller the value of the index $\alpha 6$, the smaller the dimensional change in the width direction from the time of release from the mold to the time when the shape is stabilized.

$$\alpha 6 = ([(Y2_{3\,h\,aging,\,5\,d} - Y2_{3\,h\,aging,\,6\,h})]/Y2_{3\,h\,aging,\,6\,h}) \times 100 \ ... \ (16)$$

The index $\beta 5$ (unit: mm) is calculated based on the following formula (17) using an outer dimension $X2_{3\,h\,aging,\,6\,h}$ of the tool box 52 in the longitudinal direction at the time point after six hours from the release from the mold and an outer dimension $X2_{ref}$ of the above-described reference specimen in the longitudinal direction. It means that the smaller the value of the index $\beta 5$, the easier it is to obtain a molded article having a desired dimension in the longitudinal direction even when the molded article is left to stand for a short period of time after molding.

$$\beta 5 = |X2_{ref} - X2_{3\,h\,aging,\,6\,h}| \ ... \ (17)$$

The index $\beta 6$ (unit: mm) is calculated based on the following formula (18) using an outer dimension $Y2_{3\,h\,aging,\,6\,h}$ of the tool box 52 in the width direction at the time point after six hours from the release from the mold and an outer dimension $Y2_{ref}$ of the above-described reference specimen in the width direction. It means that the smaller the value of the index $\beta 6$, the easier it is to obtain a molded article having a desired dimension in the width direction even when the molded article is left to stand for a short period of time after molding.

$$\beta 6 = |Y2_{ref} - Y2_{3\,h\,aging,\,6\,h}| \ ... \ (18)$$

[Table 2]

(Table 2)

| | | | | Unit | Expanded bead A | Expanded bead B | Expanded bead C |
|---|---|---|---|---|---|---|---|
| Resin particle | Core layer | PP(A) | Type | - | PP-A | PP-A | PP-A |
| | | | Melting point | °C | 142 | 142 | 142 |
| | | | Flexural modulus | MPa | 950 | 950 | 950 |
| | | | Mass ratio | mass% | 60 | 60 | 40 |
| | | PP(B) | Type | | PP-B | PP-B | PP-B |
| | | | Melting point | °C | 153 | 153 | 153 |
| | | | Flexural modulus | MPa | 1350 | 1350 | 1350 |
| | | | Mass ratio | mass% | 40 | 40 | 60 |
| | | Melting point | | °C | 149 | 149 | 151 |
| | | Flexural modulus | | MPa | 1210 | 1210 | 1300 |
| | | Mass ratio in res in particle | | Parts by mass | 95 | 95 | 95 |
| | Covering layer | Type of resin | | - | PP-C | PP-C | PP-C |
| | | Melting point | | °C | 133 | 133 | 133 |
| | | Mass ratio in resin particle | | Parts by mass | 5 | 5 | 5 |
| | Melting point of res in particle | | | °C | 149 | 149 | 151 |
| First expanding condition | Foaming temperature | | | °C | 156.0 | 156.7 | 157.5 |
| | Foaming pressure | | | MPa(G) | 2.0 | 1.8 | 1.8 |
| Second expanding condition | Internal pressure of first-step expanded bead | | | MPa(G) | 0.5 | 0.5 | 0.5 |
| | Drum pressure | | | MPa(G) | 0.08 | 0.07 | 0.08 |

(continued)

| | | | Unit | Expanded bead A | Expanded bead B | Expanded bead C |
|---|---|---|---|---|---|---|
| Expanded bead | | Bulk density | kg/m$^3$ | 25.7 | 24.5 | 25.2 |
| | | Apparent density | kg/m$^3$ | 45.0 | 43.5 | 44.0 |
| | | Shape of defective portion | - | Through-hole | Through-hole | Through-hole |
| | | Average hole diameter d of through-holes | mm | 0.7 | 0.7 | 0.7 |
| | | Average outer diameter D of expanded beads | mm | 3.6 | 3.6 | 3.6 |
| | | d/D | - | 0.20 | 0.20 | 0.20 |
| | | Average wall thickness t of expanded beads | mm | 1.42 | 1.44 | 1.42 |
| | | t/D | - | 0.40 | 0.40 | 0.40 |
| | | Average cross-sectional area A of expanded bead | mm$^2$ | 9.5 | 9.7 | 9.5 |
| | | Average cross-sectional area Ca per defective portion | mm$^2$ | 0.4 | 0.4 | 0.4 |
| | | Total cross-sectional area Ct of defective portions | mm$^2$ | 0.4 | 0.4 | 0.4 |
| | | Ca/A | - | 0.04 | 0.04 | 0.04 |
| | | Ct/A | - | 0.04 | 0.04 | 0.04 |
| | | Closed cell content of expanded bead | % | 98.6 | 98.6 | 99.0 |
| | | Heat of fusion $Q_{H2}$ of high-temperature peak | J/g | 19 | 17 | 17 |
| | | Heat of fusion $Q_{H1}$ of resin intrinsic peak | J/g | 67 | 59 | 63 |
| | | Total Heat of fusion $Q_{H1}+Q_{H2}$ | J/g | 86 | 76 | 80 |
| | | $Q_{H2}/Q_{H1}$ | - | 0.28 | 0.29 | 0.27 |
| | | $Q_{H2}/(Q_{H1}+Q_{H2})$ | - | 0.22 | 0.23 | 0.21 |
| Moldability | | Lower limit of molding pressure | MPa(G) | 0.34 | 0.32 | 0.34 |
| | Moldable range | Molding pressure | MPa(G) | 0.34-0.38 | 0.32-0.38 | 0.34-0.38 |
| | | Number of conditions | - | 3 | 4 | 3 |

[Table 3]

(Table 3)

| | | | | Unit | Expanded bead D | Expanded bead E | Expanded bead F |
|---|---|---|---|---|---|---|---|
| Resin particle | Core layer | PP(A) | Type | - | PP-A | PP-A | PP-A |
| | | | Meltiny point | °C | 142 | 142 | 142 |
| | | | Flexural modulus | MPa | 950 | 950 | 950 |
| | | | Mass ratio | mas% | 60 | 100 | 80 |
| | | PP(B) | Type | - | | - | PP-B |
| | | | Melting point | °C | PP-B 153 | - | 153 |
| | | | Flexural modulus | MPa | 1350 | - | 1350 |
| | | | Mass ratio | mass% | 40 | - | 20 |
| | | Melting point | | °C | 149 | 142 | 147 |
| | | Flexural modulus | | MPa | 1210 | 950 | 1150 |
| | | Mass ratio in resin particle | | Parts by mass | 95 | 95 | 95 |
| | Covering layer | Type of resin | | - | PP-C | PP-C - | PP-C |
| | | Melting point point | | °C | 133 | 133 | 133 |
| | | Mass ratio in resin particle | | Parts by mass | 5 | 5 | 5 |
| | Melting point of resin particle | | | °C | 149 | 142 | 147 |
| First expanding condition | Foaming temperature | | | °C | 156.0 | 150.7 | 154.9 |
| | Foaming pressure | | | MPa(G) | 2.1 | 2.0 | 1.8 |
| Second expanding condition | Internal pressure of first-step expanded bead | | | MPa(G) | 0.5 | 0.5 | 0.5 |
| | Drum pressure | | | MPa(G) | 0.07 | 0.06 | 0.06 |

(continued)

| | | | Unit | Expanded bead D | Expanded bead E | Expanded bead F |
|---|---|---|---|---|---|---|
| Expanded bead | | Bulk density | kg/m³ | 25.0 | 24.8 | 24.5 |
| | | Apparent density | kg/m³ | 45.0 | 44.0 | 43.5 |
| | | Shape of defective portion | - | Groove | Through-hole | Through-hole |
| | | Average hole diameter d of through-holes | mm | - | 0.7 | 0.7 |
| | | Average outer diameter D of expanded beads | mm | 4.0 | 3.5 | 3.6 |
| | | d/D | - | - | 0.20 | 0.20 |
| | | Average wall thickness t of expanded beads | mm | - | 1.40 | 1.44 |
| | | t/D | - | - | 0.40 | 0.40 |
| | | Average cross-sectional area A of expanded bead | mm² | 9.4 | 9.2 | 9.8 |
| | | Average cross-sectional area Ca per defective portion | mm² | 0.4 | 0.4 | 0.4 |
| | | Total cross-sectional area Ct of defective portions | mm² | 1.5 | 0.4 | 0.4 |
| | | Ca/A | - | 0.04 | 0.04 | 0.04 |
| | | Ct/A | - | 0.15 | 0.04 | 0.04 |
| | | Closed cell content of expanded bead | % | 98.8 | 98.7 | 99.1 |
| | | Heat of fusion $Q_{H2}$ of high-temperature peak | J/g | 19 | 15 | 16 |
| | | Heat of fusion $Q_{H1}$ of resin intrinsic peak | J/g | 66 | 47 | 66 |
| | | Total Heat of fusion $Q_{H1}+Q_{H2}$ | J/g | 85 | 62 | 82 |
| | | $Q_{H2}/Q_{H1}$ | - | 0.29 | 0.32 | 0.24 |
| | | $Q_{H2}(Q_{H1}+Q_{H2})$ | - | 0.22 | 0.24 | 0.20 |
| Moldability | | Lower limit of molding pressure | MPa(G) | 0.34 | 0.30 | 0.32 |
| | Moldable range | Molding pressure | MPa(G) | 0.34-0.38 | 0.30-0.36 | 0.32-0.38 |
| | | Number of conditions | - | 3 | 4 | 4 |

[Table 4]

(Table 4)

| | | | | Unit | Expanded bead G | Expanded bead H | Expanded bead I |
|---|---|---|---|---|---|---|---|
| Resin particle | Core layer | PP(A) | Type | - | - | PP-A | PP-A |
| | | | Melting point | °C | - | 142 | 142 |
| | | | Flexural modulus | MPa | - | 950 | 950 |
| | | | Mass ratio | mass% mass% | - | 60 | 60 |
| | | PP(B) | Type | - | PP-B | PP-B | PP-B |
| | | | Melting point | °C | 153 | 153 | 153 |
| | | | Flexural modulus | MPa | 1350 | 1350 | 1350 |
| | | | Mass ratio | mass% mass% | 100 | 40 | 40 |
| | | Melting point | | °C | 153 | 149 | 149 |
| | | Flexural modulus | | MPa | 1350 | 1210 | 1210 |
| | | Mass ratio in resin particle | | Parts by mass | 95 | 95 | 95 |
| | Covering layer | Type of resin | | - | PP-C | PP-C | PP-C |
| | | Melting point Melting point | | °C | 133 | 134 | 134 |
| | | Mass ratio in resin particle | | Parts by mass | 5 | 5 | 5 |
| | Melting point of resin particle | | | °C | 153 | 149 | 149 |
| First expanding condition | Foaming temperature | | | °C | 158.6 | 156.2 | 156.2 |
| | Foaming pressure | | | MPa(G) | 2.3 | 1.9 | 1.8 |
| Second expanding condition | Internal pressure of first-step expanded bead | | | MPa(G) | 0.5 | 0.5 | 0.5 |
| | Drum pressure | | | MPa(G) | 0.08 | 0.07 | 0.08 |

(continued)

| | | | Unit | Expanded bead G | Expanded bead H | Expanded bead I |
|---|---|---|---|---|---|---|
| Expanded bead | | Bulk density | kg/m$^3$ | 24.8 | 25.0 | 25.4 |
| | | Apparent density | kg/m$^3$ | 44.0 | 40.0 | 51.5 |
| | | Shape of defective portion | - | Through-hole | None | Through-hole |
| | | Average hole diameter d of through-holes | mm | 0.7 | - | 1.6 |
| | | Average outer diameter D of expanded beads | mm | 3.6 | 3.7 | 3.6 |
| | | d/D | - | 0.20 | - | 0.44 |
| | | Average wall thickness t of expanded beads | mm | 1.46 | - | 1.01 |
| | | t/D | - | 0.40 | - | 0.28 |
| | | Average cross-sectional area A of expanded bead | mm$^2$ | 9.9 | - | 8.1 |
| | | Average cross-sectional area Ca per defective portion | mm$^2$ | 0.4 | - | 1.9 |
| | | Total cross-sectional area Ct of defective portions | mm$^2$ | 0.4 | - | 1.9 |
| | | Ca/A | - | 0.04 | - | 0.23 |
| | | Ct/A | - | 0.04 | - | 0.23 |
| | | Closed cell content of expanded bead | % | 98.7 | 99.0 | 98.6 |
| | | Heat of fusion $Q_{H2}$ of high-temperature peak | J/g | 19 | 19 | 19 |
| | | Heat of fusion $Q_{H1}$ of resin intrinsic peak | J/g | 66 | 68 | 65 |
| | | Total Heat of fusion $Q_{H1}+Q_{H2}$ | J/g | 85 | 87 | 84 |
| | | $Q_{H2}/Q_{H1}$ | - | 0.29 | 0.28 | 0.29 |
| | | $Q_{H2}/(Q_{H1}+Q_{H2})$ | - | 0.22 | 0.22 | 0.23 |
| Moldability | | Lower limit of molding pressure | MPa(G) | 0.38 | 0.34 | 0.32 |
| | Moldable range | Molding pressure | MPa(G) | 0.38-0.40 | 0.34-0.38 | 0.32-0.34 |
| | | Number of conditions | - | 2 | 3 | 2 |

[Table 5]

(Table 5)

| | Unit | Example 1-1 | Example 1-2 | Example 1-3 | Example 1-4 |
|---|---|---|---|---|---|
| Expanded bead | - | Expanded beads A | Expanded beads A | Expanded beads A | Expanded beads A |

(continued)

| | | Unit | Example 1-1 | Example 1-2 | Example 1-3 | Example 1-4 |
|---|---|---|---|---|---|---|
| Molding condition | Mold shape | - | Bumper core | Bumper core | Tool box | Tool box |
| | Bead internal pressure | MPa(G) | 0.15 | 0.15 | 0.15 | 0.15 |
| | Cracking amount | % | 10 | 10 | 10 | 10 |
| | Molding pressure | MPa(G) | 0.32 | 0.32 | 0.34 | 0.34 |
| | Water cooling time | Seconds | 90 | 90 | 55 | 55 |
| Molded article | Aging conditions | - | No aging | 3 h aging | No aging | 3 h aging |
| | Density | kg/m$^3$ | 30 | 30 | 30 | 30 |
| | Appearance | - | A | A | A | A |
| | Dimensional stability | - | A | A | A | A |

[Table 6]

(Table 6)

| | | Unit | Example 2-1 | Example 2-2 | Example 2-3 | Example 2-4 |
|---|---|---|---|---|---|---|
| Expanded bead | | - | Expanded bead B | Expanded bead B | Expanded bead B | Expanded bead B |
| Molding condition | Mold shape | - | Bumper core | Bumper core | Tool box | Tool box |
| | Bead internal pressure | MPa(G) | 0.15 | 0.15 | 0.15 | 0.15 |
| | Cracking amount | % | 10 | 10 | 10 | 10 |
| | Molding pressure | MPa(G) | 0.30 | 0.30 | 0.32 | 0.32 |
| | Water cooling time | Seconds | 100 | 100 | 60 | 60 |
| Molded article | Aging conditions | - | No aging | 3 h aging | No aging | 3 h aging |
| | Density | kg/m$^3$ | 30 | 30 | 30 | 30 |
| | Appearance | - | A | A | A | A |
| | Dimensional stability | - | A | A | B | B |

[Table 7]

(Table 7)

| | Unit | Example 3-1 | Example 3-2 | Example 3-3 | Example 3-4 |
|---|---|---|---|---|---|
| Expanded bead | - | Expanded bead C | Expanded bead C | Expanded bead C | Expanded bead C |

(continued)

| | | Unit | Example 3-1 | Example 3-2 | Example 3-3 | Example 3-4 |
|---|---|---|---|---|---|---|
| Molding condition | Mold shape | - | Bumper core | Bumper core | Tool box | Tool box |
| | Bead internal pressure | MPa(G) | 0.15 | 0.15 | 0.15 | 0.15 |
| | Cracking amount | % | 10 | 10 | 10 | 10 |
| | Molding pressure | MPa(G) | 0.32 | 0.32 | 0.34 | 0.34 |
| | Water cooling time | Seconds | 90 | 90 | 55 | 55 |
| Molded article | Aging conditions | - | No aging | 3 h aging | No aging | 3 h aging |
| | Density | kg/m³ | 30 | 30 | 30 | 30 |
| | Appearance | - | A | A | A | A |
| | Dimensional stability | - | A | A | A | A |

[Table 8]

(Table 8)

| | | Unit | Example 4-1 | Example 4-2 | Example 4-3 | Example 4-4 |
|---|---|---|---|---|---|---|
| Expanded bead | | - | Expanded bead D | Expanded bead D | Expanded bead D | Expanded bead D |
| Molding condition | Mold shape | - | Bumper core | Bumper core | Tool box | Tool box |
| | Bead internal pressure | MPa(G) | 0.15 | 0.15 | 0.15 | 0.15 |
| | Cracking amount | % | 10 | 10 | 10 | 10 |
| | Molding pressure | MPa(G) | 0.32 | 0.32 | 0.34 | 0.34 |
| | Water cooling time | Seconds | 95 | 95 | 60 | 60 |
| Molded article | Aging conditions | - | No aging | 3 h aging | No aging | 3 h aging |
| | Density | kg/m³ | 30 | 30 | 30 | 30 |
| | Appearance | - | A | A | A | A |
| | Dimensional stability | - | A | A | A | A |

[Table 9]

(Table 9)

| | Unit | Comparative Example 1-1 | Comparative Example 1-2 | Comparative Example 1-3 | Comparative Example 1-4 |
|---|---|---|---|---|---|
| Expanded bead | - | Expanded bead E | Expanded bead E | Expanded bead E | Expanded bead E |

(continued)

| | | Unit | Comparative Example 1-1 | Comparative Example 1-2 | Comparative Example 1-3 | Comparative Example 1-4 |
|---|---|---|---|---|---|---|
| Molding condition | Mold shape | - | Bumper core | Bumper core | Tool box | Tool box |
| | Bead internal pressure | MPa(G) | 0.15 | 0.15 | 0.15 | 0.15 |
| | Cracking amount | % | 10 | 10 | 10 | 10 |
| | Molding pressure | MPa(G) | 0.28 | 0.28 | 0.30 | 0.30 |
| | Water cooling time | Seconds | 150 | 150 | 85 | 85 |
| Molded article | Aging conditions | - | No aging | 3 h aging | No aging | 3 h aging |
| | Density | kg/m³ | 30 | 30 | 30 | 30 |
| | Appearance | - | A | A | A | A |
| | Dimensional stability | - | B | B | C | B |

[Table 10]

(Table 10)

| | | Unit | Comparative Example 2-1 | Comparative Example 2-2 | Comparative Example 2-3 | Comparative Example 2-4 |
|---|---|---|---|---|---|---|
| Expanded bead | | - | Expanded bead F | Expanded bead F | Expanded bead F | Expanded bead F |
| Molding condition | Mold shape | - | Bumper core | Bumper core | Tool box | Tool box |
| | Bead internal pressure | MPa(G) | 0.15 | 0.15 | 0.15 | 0.15 |
| | Cracking amount | % | 10 | 10 | 10 | 10 |
| | Molding pressure | MPa(G) | 0.28 | 0.28 | 0.30 | 0.30 |
| | Water cooling time | Seconds | 140 | 140 | 80 | 80 |
| Molded article | Aging conditions | - | No aging | 3 h aging | No aging | 3 h aging |
| | Density | kg/m³ | 30 | 30 | 30 | 30 |
| | Appearance | - | A | A | A | A |
| | Dimensional stability | - | B | A | C | B |

[Table 11]

(Table 11)

| | | Unit | Comparative Example 3-1 | Comparative Example 3-2 | Comparative Example 3-3 | Comparative Example 3-4 |
|---|---|---|---|---|---|---|
| Expanded bead | | - | Expanded bead G | Expanded bead G | Expanded bead G | Expanded bead G |
| Molding condition | Mold shape | - | Bumper core | Bumper core | Tool box | Tool box |
| | Bead internal pressure | MPa(G) | 0.15 | 0.15 | 0.15 | 0.15 |
| | Cracking amount | % | 10 | 10 | 10 | 10 |
| | Molding pressure | MPa(G) | 0.38 | 0.38 | 0.40 | 0.40 |
| | Water cooling time | Seconds | 85 | 85 | 50 | 50 |
| Molded article | Aging conditions | - | No aging | 3 h aging | No aging | 3 h aging |
| | Density | $kg/m^3$ | 30 | 30 | 30 | 30 |
| | Appearance | - | C | C | C | C |
| | Dimensional stability | - | Not evaluated | Not evaluated | Not evaluated | Not evaluated |

[Table 12]

(Table 12)

| | | Unit | Comparative Example 4-1 | Comparative Example 4-2 | Comparative Example 4-3 | Comparative Example 4-4 |
|---|---|---|---|---|---|---|
| Expanded bead | | - | Expanded bead H | Expanded bead H | Expanded bead H | Expanded bead H |
| Molding condition | Mold shape | - | Bumper core | Bumper core | Tool box | Tool box |
| | Bead internal pressure | MPa(G) | 0.15 | 0.15 | 0.15 | 0.15 |
| | Cracking amount | % | 10 | 10 | 10 | 10 |
| | Molding pressure | MPa(G) | 0.32 | 0.32 | 0.34 | 0.34 |
| | Water cooling time | Seconds | 170 | 170 | 110 | 110 |
| Molded article | Aging conditions | - | No aging | 3 h aging | No aging | 3 h aging |
| | Density | $kg/m^3$ | 30 | 30 | 30 | 30 |
| | Appearance | - | A | A | A | A |
| | Dimensional stability | - | B | B | C | B |

[Table 13]

(Table 13)

| | | Unit | Comparative Example 5-1 | Comparative Example 5-2 | Comparative Example 5-3 | Comparative Example 5-4 |
|---|---|---|---|---|---|---|
| Expanded bead | | - | Expanded bead I | Expanded bead I | Expanded bead I | Expanded bead I |
| Molding condition | Mold shape | - | Bumper core | Bumper core | Tool box | Tool box |
| | Bead internal pressure | MPa(G) | 0.15 | 0.15 | 0.15 | 0.15 |
| | Cracking amount | % | 10 | 10 | 10 | 10 |
| | Molding pressure | MPa(G) | 0.30 | 0.30 | 0.32 | 0.32 |
| | Water cooling time | Seconds | 50 | 50 | 30 | 30 |
| Molded article | Aging conditions | - | No aging | 3 h aging | No aging | 3 h aging |
| | Density | kg/m$^3$ | 30 | 30 | 30 | 30 |
| | Appearance | - | C | C | C | C |
| | Dimensional stability | - | Not evaluated | Not evaluated | Not evaluated | Not evaluated |

As shown in Table 2 and Table 3, the expanded beads A to D have the specific shape. In addition, the foamed layers of the expanded beads A to D are made of the polypropylene-based resin containing the polypropylene-based resin (A) and the polypropylene-based resin (B) in the specific mass ratio. Therefore, as shown in Examples 1-1 to 1-4 in Table 5, Examples 2-1 to 2-4 in Table 6, Examples 3-1 to 3-4 in Table 7, and Examples 4-1 to 4-4 in Table 8, these expanded beads were capable of improving the dimensional stability of the molded articles even in a case where the aging step was not performed or a case where the time of the aging step was shortened. In addition, no streaky pattern was observed from the molded articles obtained by the in-mold molding of the expanded beads A to D.

In addition, as shown in Tables 5 to 8, the molded articles composed of these expanded beads were capable of reducing the dimensional change after the release from the mold. Therefore, these results show that the use of the expanded beads A to D makes it possible to produce a molded article having a relatively long maximum length, a molded article having a complicated shape, or a molded article requiring high dimensional accuracy by omitting the aging step or shortening the time of the aging step.

On the other hand, the foamed layer of the expanded bead E shown in Table 3 is composed only of the polypropylene-based resin (A) and does not contain the polypropylene-based resin (B). Therefore, as shown in Table 9, the molded articles of Comparative Examples 1-1 to 1-4 composed of the expanded bead E had poor dimensional stability compared with the molded articles of Examples.

In the foamed layer of the expanded bead F shown in Table 3, the polypropylene-based resin (A) and the polypropylene-based resin (B) are contained, but the mass ratio of the polypropylene-based resin (B) is smaller than the above-described specific range. Therefore, as shown in Table 10, the molded articles of Comparative Examples 2-1 to 2-4 composed of the expanded bead F had poor dimensional stability compared with the molded articles of Examples.

The foamed layer of the expanded bead G shown in Table 4 is composed only of the polypropylene-based resin (B) and does not contain the polypropylene-based resin (A). Therefore, as shown in Table 11, the molding pressure became excessively high when the molded articles of Comparative Examples 3-1 to 3-4 composed of the expanded beads G were produced. In addition, the expanded bead G had insufficient secondary expandability, and the molded articles of Comparative Examples 3-1 to 3-4 were evaluated as fail in terms of appearance.

The expanded bead H shown in Table 4 has no defective portions. Therefore, as shown in Table 12, the molded articles of Comparative Examples 4-1 to 4-4 composed of the expanded bead H had poor dimensional stability compared with the molded articles of Examples. In addition, for the molded articles of Comparative Examples 4-1 to 4-4, the time taken for cooling during the in-mold molding (that is, the water cooling time) was long, and the productivity was poor.

The expanded bead I shown in Table 4 has larger through-holes than the expanded beads A to D, and the ratio Ca/A of the average cross-sectional area Ca per defective portion to the average cross-sectional area A of the expanded bead and/or the ratio Ct/A of the total cross-sectional area Ct of the defective portion(s) to the average cross-sectional area A of the expanded bead are larger than the above-described specific ranges. Therefore, as shown in Table 13, the molded articles of Comparative Examples 5-1 to 5-4 composed of the expanded beads I were evaluated as fail in terms of appearance.

Hitherto, the aspects of the polypropylene-based resin expanded bead, the polypropylene-based resin molded article of expanded beads, the automotive bumper core, and the automotive tool box of the present invention have been described based on Examples. However, the specific aspects of the polypropylene-based resin expanded bead, the polypropylene-based resin molded article of expanded beads, the automotive bumper core, and the automotive tool box according to the present invention are not limited to those of Examples, and the configurations can be appropriately modified without departing from the spirit of the present invention.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A polypropylene-based resin expanded bead having a foamed layer made of a polypropylene-based resin, wherein

   the expanded bead has a columnar shape and has one or more defective portions of one or two kinds selected from the group consisting of a through-hole penetrating an inside of the expanded bead in an axial direction of the expanded bead and a groove extending along the axial direction on a side peripheral surface of the expanded bead,
   a ratio Ca/A of an average cross-sectional area Ca per defective portion to an average cross-sectional area A of the expanded bead in a cut plane obtained by cutting the expanded bead in a plane perpendicular to the axial direction at a center of the expanded bead in the axial direction is 0.01 or more and 0.20 or less, a ratio Ct/A of a total cross-sectional area Ct of the defective portion(s) to the average cross-sectional area A of the expanded bead is 0.02 or more and 0.20 or less,
   the polypropylene-based resin constituting the foamed layer contains a polypropylene-based resin (A) having a melting point of 135°C or higher and 150°C or lower and a flexural modulus of less than 1000 MPa and a polypropylene-based resin (B) having a melting point of 145°C or higher and 160°C or lower and a flexural modulus of 1000 MPa or more, and
   a mass ratio between the polypropylene-based resin (A) and the polypropylene-based resin (B) in the polypropylene-based resin is represented by polypropylene-based resin (A):polypropylene-based resin (B) 65:35 to 35:65.

2. The polypropylene-based resin expanded bead according to Claim 1, wherein an absolute value of a difference between a flexural modulus of the polypropylene-based resin (A) and a flexural modulus of the polypropylene-based resin (B) is 200 MPa or more and 500 MPa or less.

3. The polypropylene-based resin expanded bead according to Claim 1 or 2, wherein the polypropylene-based resin (B) is one or more propylene-based copolymers selected from the group consisting of an ethylene-propylene copolymer, a butene-propylene copolymer, and an ethylene-butene-propylene copolymer.

4. The polypropylene-based resin expanded bead according to Claim 3, wherein a total content of an ethylene component and a butene component in the polypropylene-based resin (B) is 0.5 mass% or more and 2.5 mass% or less.

5. The polypropylene-based resin expanded bead according to any one of Claims 1 to 4, wherein the polypropylene-based resin expanded bead has a crystal structure such that a resin intrinsic peak derived from melting of a crystal intrinsic to the polypropylene-based resin and a high-temperature peak having a vertex temperature higher than a vertex temperature of the resin intrinsic peak appear on a DSC curve obtained when the expanded bead is heated from 23°C to 200°C at a heating rate of 10°C/min, and
a heat of fusion of the high-temperature peak is 8 J/g or more and 25 J/g or less.

6. The polypropylene-based resin expanded bead according to any one of Claims 1 to 5, wherein the polypropylene-based resin expanded bead has an apparent density of 15 kg/m$^3$ or more and 200 kg/m$^3$ or less.

7. A molded article of polypropylene-based resin expanded beads, obtained by in-mold molding of the polypropylene-based resin expanded beads according to any one of Claims 1 to 6.

8. The molded article of polypropylene-based resin expanded beads according to Claim 7, wherein the molded article has a maximum length of 600 mm or more.

9. An automotive bumper core, obtained by in-mold molding of the polypropylene-based resin expanded beads according to any one of Claims 1 to 6.

10. An automotive tool box, obtained by in-mold molding of the polypropylene-based resin expanded beads according to any one of Claims 1 to 6.

FIG. 1

FIG. 2

FIG. 3

FIG. 4

FIG. 5

FIG. 6

FIG. 7

FIG. 8

FIG. 9

FIG. 10

FIG. 11

51

FIG. 12

52(5)

521b

523b

(521)521a

523c

524

523d

(523)
523a

522

FIG. 13

Europäisches
Patentamt

European
Patent Office

Office européen
des brevets

# EUROPEAN SEARCH REPORT

**Application Number**

EP 25 20 4561

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/074915 A1 (SHIMADA TOMOHITO [JP] ET AL) 9 March 2023 (2023-03-09) | 1-7,10 | INV.<br>C08J9/00 |
| Y | * figures 1, 5; example comparative example 3; tables 3, 5 *<br>* paragraph [0047] * | 8,9 | C08J9/18<br>C08J9/232 |
| | ----- | | |
| Y | WO 2024/075742 A1 (JSP CORP [JP]) 11 April 2024 (2024-04-11)<br>* claims 1-6; examples 1-11 *<br>& EP 4 578 901 A1 (JSP CORP [JP]) 2 July 2025 (2025-07-02)<br>* paragraphs [0212] - [0213], [0265] - [0276], [0322]; claims 1-6; examples 1-11 * | 8,9 | |
| | ----- | | |

**TECHNICAL FIELDS SEARCHED (IPC)**

C08J

The present search report has been drawn up for all claims

| Place of search | Date of completion of the search | Examiner |
|---|---|---|
| The Hague | 25 February 2026 | Mayer, Anne |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

   .....................................................................................
& : member of the same patent family, corresponding
   document

## ANNEX TO THE EUROPEAN SEARCH REPORT
## ON EUROPEAN PATENT APPLICATION NO.

EP 25 20 4561

This annex lists the patent family members relating to the patent documents cited in the above-mentioned European search report.
The members are as contained in the European Patent Office EDP file on
The European Patent Office is in no way liable for these particulars which are merely given for the purpose of information.

25-02-2026

| Patent document cited in search report | Publication date | Patent family member(s) | | Publication date |
|---|---|---|---|---|
| US 2023074915 A1 | 09-03-2023 | CN | 115427487 A | 02-12-2022 |
| | | EP | 4101628 A1 | 14-12-2022 |
| | | JP | 7664860 B2 | 18-04-2025 |
| | | JP | WO2021157369 A1 | 12-08-2021 |
| | | KR | 20220137936 A | 12-10-2022 |
| | | TW | 202140651 A | 01-11-2021 |
| | | US | 2023074915 A1 | 09-03-2023 |
| | | WO | 2021157369 A1 | 12-08-2021 |
| WO 2024075742 A1 | 11-04-2024 | CN | 119866358 A | 22-04-2025 |
| | | EP | 4578901 A1 | 02-07-2025 |
| | | KR | 20250086682 A | 13-06-2025 |
| | | TW | 202432686 A | 16-08-2024 |
| | | WO | 2024075742 A1 | 11-04-2024 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022270425 A

- JP 2003201361 A

**Non-patent literature cited in the description**

- Polymer Analysis Handbook. Kinokuniya Company Ltd., January 1995